(19) Europäisches Patentamt
European Patent Office
Office européen des brevets

(11) **EP 3 165 946 B1**

(12) **EUROPEAN PATENT SPECIFICATION**

(45) Date of publication and mention
of the grant of the patent:
**08.03.2023 Bulletin 2023/10**

(21) Application number: **16195603.2**

(22) Date of filing: **25.10.2016**

(51) International Patent Classification (IPC):
*G01S 17/42* $^{(2006.01)}$    *G01S 7/481* $^{(2006.01)}$
*G01S 7/484* $^{(2006.01)}$    *G01S 17/931* $^{(2020.01)}$

(52) Cooperative Patent Classification (CPC):
**G01S 7/4815; G01S 7/4817; G01S 7/484;**
**G01S 17/42; G01S 17/931**

(54) **OBJECT DETECTOR, SENSOR, AND MOVABLE DEVICE**

OBJEKTDETEKTOR, SENSOR UND BEWEGLICHE VORRICHTUNG

DÉTECTEUR D'OBJET, CAPTEUR ET DISPOSITIF MOBILE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **06.11.2015 JP 2015218229**

(43) Date of publication of application:
**10.05.2017 Bulletin 2017/19**

(73) Proprietor: **Ricoh Company, Ltd.**
**Tokyo 143-8555 (JP)**

(72) Inventors:
• **SAKAI, Kohji**
**Tokyo 143-8555 (JP)**
• **IMAI, Shigeaki**
**Tokyo 143-8555 (JP)**
• **NAKAMURA, Tadashi**
**Tokyo 143-8555 (JP)**
• **UEHIRA, Masataka**
**Tokyo 143-8555 (JP)**

(74) Representative: **J A Kemp LLP**
**80 Turnmill Street**
**London EC1M 5QU (GB)**

(56) References cited:
EP-A1- 2 631 667    JP-A- H02 306 108
US-A- 5 552 893    US-A- 5 864 391
US-A1- 2015 124 238    US-B1- 6 327 029

**Description**

BACKGROUND

Technical Field

Embodiments of the present disclosure generally relate to an object detector, a sensor, and a movable device, and specifically to an object detector for detecting an object, a sensor including the object detector, and a movable device including the sensor.

Related Art

In recent years, there have been developed various devices for receiving light emitted from a light emitter and reflected by an object to detect the distance to the object.

For example, JP-5096008-B1 (JP-2007-214564-A) discloses a device including a light-emitting unit with a plurality of light-emitting regions, to obtain the distance to an object.

JP H02 306108 discloses an object detector that detects a three dimensional position of an object. US 2015/0124238 A1 discloses an object detecting apparatus. EP 2 631 667 A1 discloses a distance measuring device; US 5 864 391 A, US 5 552 893 A and US 6 327 029 B1 represent further prior art in the technical field.

In recent years, there is a demand for obtaining the distance to an object more accurately.

SUMMARY

According to the present invention, there is provided an object detector as described in the appended claim 1.

In an aspect of this disclosure, there is provided a sensor including the object detector as described above and a monitoring controller. The monitoring controller obtains movement information including at least one of movement or non-movement of the object, a moving direction, and a moving speed of the object.

Further described is a movable device including the sensor as described above and a movable body on which the sensor is mounted.

According to embodiments of the present disclosure, the distance to an object can be obtained more accurately.

BRIEF DESCRIPTION OF THE DRAWINGS

The aforementioned and other aspects, features, and advantages of embodiments of the present disclosure will be better understood by reference to the following detailed description when considered in connection with the accompanying drawings, wherein:

FIG. 1 is an external view of a vehicle mounted with a laser radar, according to an embodiment of the present disclosure;

FIG. 2 is a block diagram of the configuration of a monitoring apparatus according to an embodiment of the present disclosure;

FIG. 3 is an illustration of the configuration of the laser radar according to an embodiment of the present disclosure;

FIG. 4 is an illustration of a light emission system according to an embodiment of the present disclosure;

FIG. 5 is an illustration of a light emission system according to another embodiment of the present disclosure;

FIG. 6 is an illustration of a light detection system according to an embodiment of the present disclosure;

FIG. 7 is an illustration of a light detection system according to another embodiment of the present disclosure;

FIG. 8 is an illustration of a light source including a plurality of light-emitting areas arranged in the Z-axis direction;

FIG. 9 is an illustration of a plurality of light-emitting units included in each light emitting area, according to an embodiment of the present disclosure;

FIG. 10 is an illustration of a scanning range of a first rotating mirror;

FIG. 11 is an illustration of the position of a coupling lens in a first example arrangement according to an embodiment of the present disclosure;

FIG. 12 is an illustration of light that has passed through the coupling lens in the first example arrangement;

FIG. 13 is an illustration of the optical path of the light emitted from a light-emitting area in the first example arrangement according to an embodiment of the present disclosure;

FIG. 14 is an illustration of the optical path of the light emitted from a light-emitting area in the first example arrangement according to another embodiment of the present disclosure;

FIG. 15 is an illustration of detection distance of the laser radar;

FIG. 16 is an illustration of the irradiated field of detection light in the first example arrangement according to an embodiment of the present disclosure;

FIG. 17 is an illustration of a glancing angle θ in the first example arrangement according to another embodiment of the present disclosure;

FIG. 18 is an illustration of a glancing angle θ in the first example arrangement according to another embodiment of the present disclosure;

FIG. 19 is an illustration of the position of an imaging lens in the first example arrangement according to an embodiment of the present disclosure;

FIG. 20 is an illustration of the conjugate points of a light detector in the first example arrangement according to an embodiment of the present disclosure;

FIG. 21 is an illustration of the optical path of the light reflected from an object in the first example arrangement according to an embodiment of the present disclosure;

FIG. 22 is an illustration of the optical path of the light reflected from an object in the first example arrangement according to another embodiment of the present disclosure;

FIG. 23 is an illustration of the relation between an irradiated field and a detection field at conjugate points of a light detector in the first example arrangement according to an embodiment of the present disclosure;

FIG. 24 is an illustration of a detection angle in the first example arrangement according to an embodiment of the present disclosure;

FIG. 25 is an illustration of the position of a coupling lens in a second example arrangement according to an embodiment of the present disclosure;

FIG. 26 is an illustration of detection light in the second example arrangement according to an embodiment of the present disclosure;

FIG. 27 is an illustration of the optical path of light emitted from a light emitting area in the second example arrangement according to an embodiment of the present disclosure;

FIG. 28 is an illustration of the optical path of light emitted from a light emitting area in the second example arrangement according to another embodiment of the present disclosure;

FIG. 29 is an illustration of the position of an imaging lens in the second example arrangement;

FIG. 30 is an illustration of the optical path of light reflected from an object in the second example arrangement according to an embodiment of the present disclosure;

FIG. 31 is an illustration of the optical path of light reflected from an object in the second example arrangement according to another embodiment of the present disclosure;

FIG. 32 is an illustration of the relation between detection light and a light-receptive field of a light detector in the second example arrangement according to an embodiment of the present disclosure;

FIG. 33 is an illustration of an example of a scanning range divided into a plurality of detection fields;

FIG. 34A through FIG. 34D are illustrations of the order of light emission of the plurality of light emitting areas relative to the plurality of detection fields according to an embodiment not forming part of the invention;

FIG. 35 is an illustration of a maximum detection distance of the laser radar;

FIG. 36 is an illustration of a light source including the plurality of light emitting areas;

FIG. 37 is an illustration of an example, not within the scope of the claims, in which all of the light emitting areas emit light in one scan;

FIG. 38 is an illustration of an example, not within the scope of the claims, in which all of the light emitting areas emit light in two scans;

FIG. 39 is an illustration of another example, not within the scope of the claims, in which all of the light emitting areas emit light in two scans;

FIGS. 40A and 40B each is an illustration of an example, not within the scope of the claims, in which all of the light emitting areas emit light in three scans;

FIGS. 41A and 41B each is an illustration of another example, not within the scope of the claims, in which all of the light emitting areas emit light in three scans;

FIGS. 42A and 42B each is an illustration of an example in which all of the light emitting areas emit light in nine scans according to an embodiment of the present invention;

FIGS. 43A and 43B each is an illustration of an example in which all of the light emitting areas emit light in nine scans according to another embodiment of the present invention;

FIGS. 44A and 44B each is an illustration of an example in which all of the light emitting areas emit light in nine scans according to still another embodiment of the present invention;

FIG. 45 is a circuit diagram of a first example configuration of a light-source drive circuit according to an embodiment of the present disclosure;

FIG. 46 is a circuit diagram of a second example configuration of the light-source drive circuit according to an embodiment of the present disclosure;

FIG. 47 is an illustration of the plurality of light-receiving units arranged relative to the plurality of light emitting areas;

FIG. 48 is an illustration of still another example, not within the scope of the claims, in which all of the light emitting areas emit light in two scans;

FIG. 49 is an illustration of an example, in accordance with the present invention, in which all of the light emitting areas emit light in nine scans;

FIG. 50 is a block diagram of the configuration of a voice and alarm generator according to an embodiment of the present disclosure:

FIG. 51 is an illustration of a first example of the integration of a first rotating mirror and a second rotating mirror, according to an embodiment of the present disclosure; and

FIG. 52 is an illustration of a second example of the integration of the first rotating mirror and the second rotating mirror, according to an embodiment of the present disclosure.

The accompanying drawings are not to be considered as drawn to scale unless explicitly noted.

DETAILED DESCRIPTION

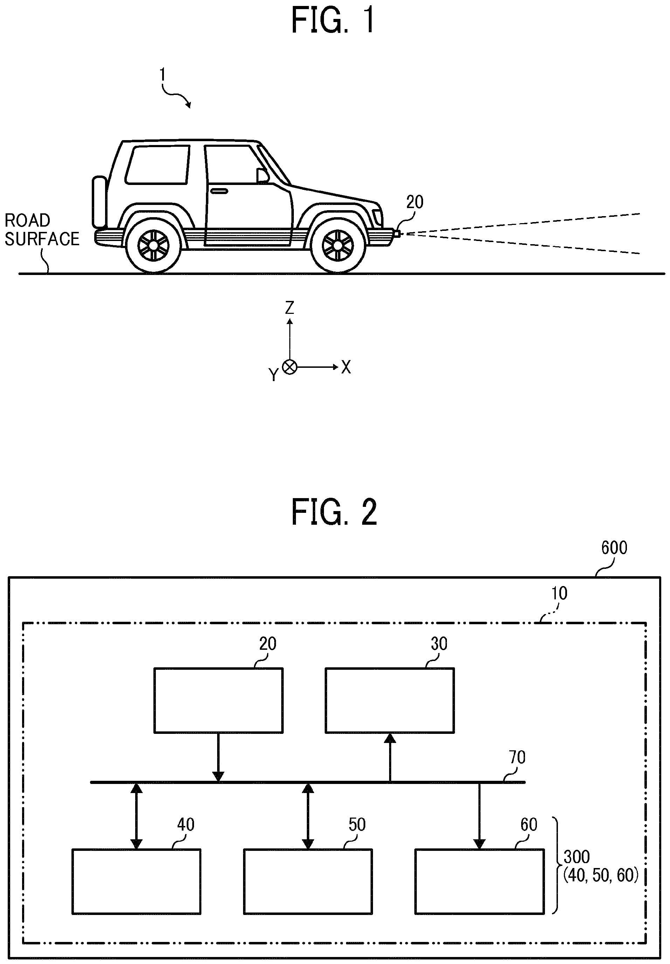

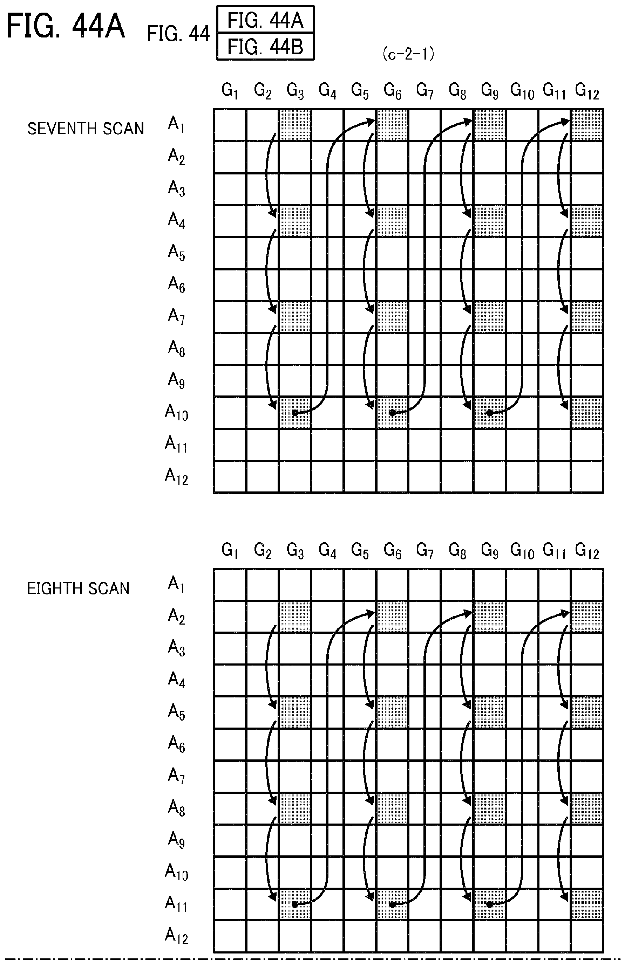

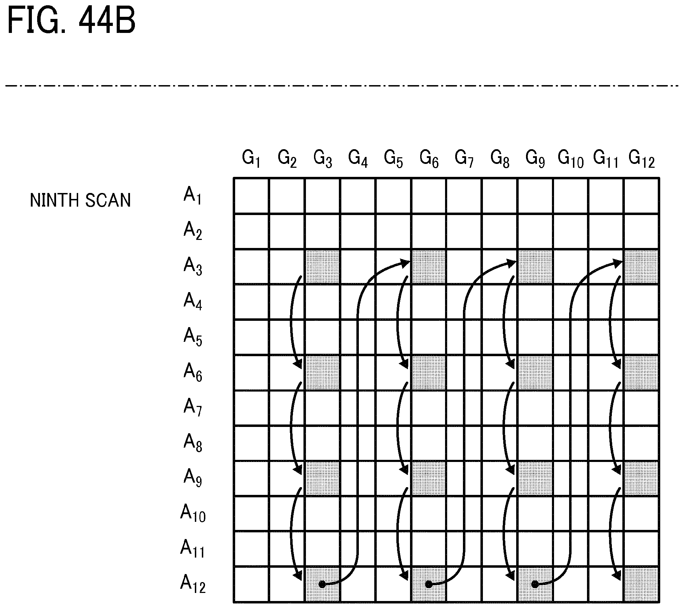

A description is provided below of comparative examples and of some embodiments of the present invention referring to FIG. 1 to FIG. 52. FIG. 1 is an illustration of the external appearance of a vehicle 1 as a movable body mounted with a laser radar 20 as an object detector, according to an embodiment of the present invention.

The laser radar 20 is fitted, for example, to a portion near the license plate disposed at the front of the vehicle 1.

In the XYZ three-dimensional orthogonal coordinate system according to the present embodiment, it is assumed that the direction orthogonal to the road surface is the Z-axis direction, and that the traveling direction of the vehicle 1 is the +X direction.

As depicted in FIG. 2 for example, the vehicle 1 includes a display 30, a main controller 40, a memory 50, and a voice-and-alarm generator 60, which are electrically connected to each other through a bus 70 through which data is transmitted.

In the present embodiment, a monitoring apparatus 10 as a sensor includes the laser radar 20, the display 30, the main controller 40, the memory 50, and the voice-and-alarm generator 60. The monitoring apparatus 10 is fitted to the vehicle 1.

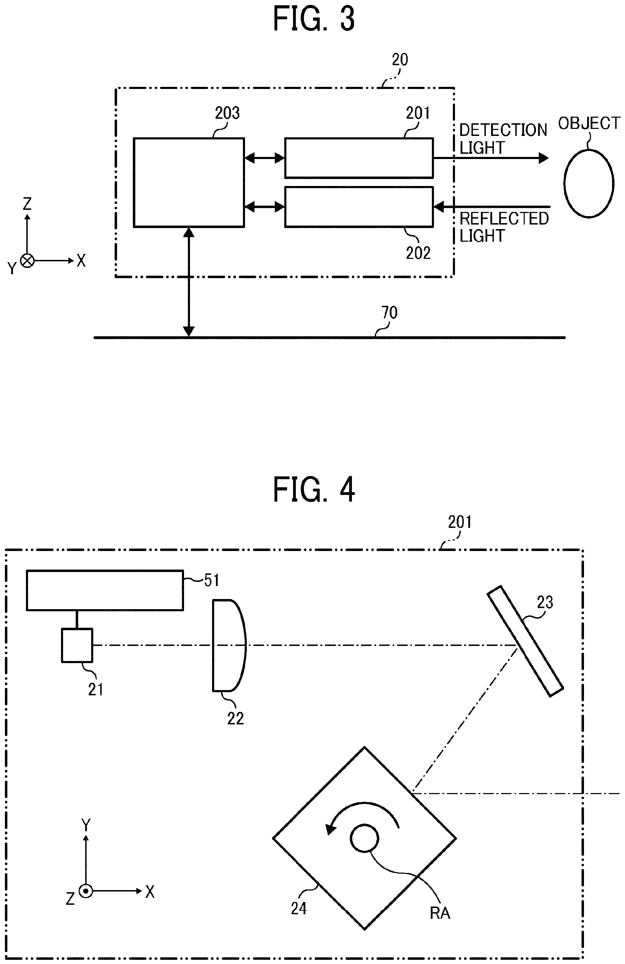

The laser radar 20, as depicted in FIG. 3 as an example, includes a light emission system 201, a light detection system 202, and an object information acquisition unit 203. The light emission system 201 emits detection light in the +X direction. The light detection system 202 detects light reflected by an object. The object information acquisition unit 203 controls the light emission system 201 and acquires object information, such as the presence or absence of the object, the distance to the object, the dimension of the object, the shape of the object, and the position of the object, based on the detection results of the light detection system 202. In the present embodiment, the light emission system 201 is arranged on the +Z side of the light detection system 202. Note that the light emission system 201, the light detection system 202, and the object information acquisition unit 203 are accommodated in a housing.

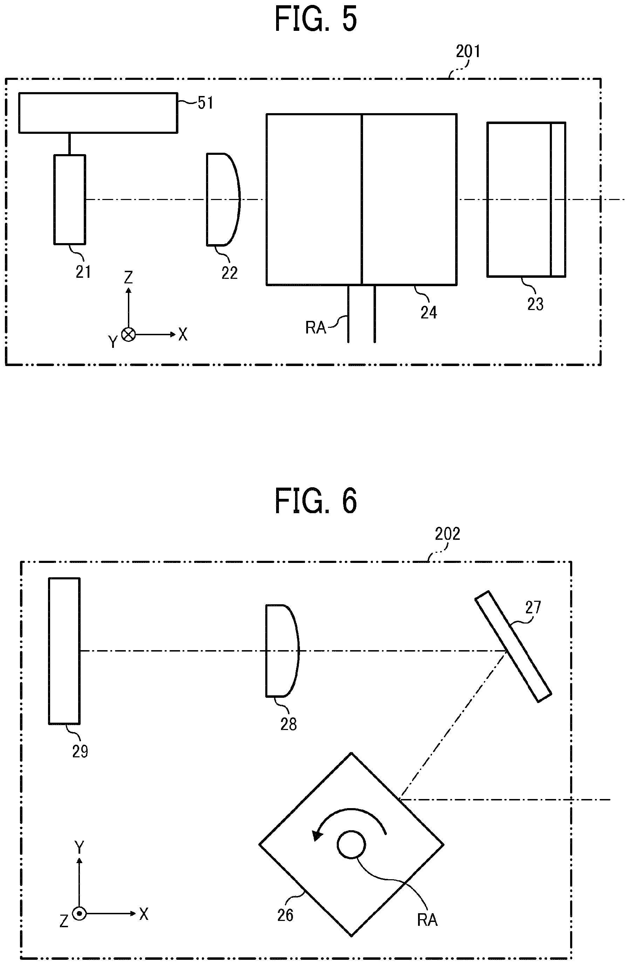

As illustrated in FIG. 4 and FIG. 5, the light emission system 201 includes, for example, a light source 21, a coupling lens 22, a first reflecting mirror 23, a first rotating mirror 24, and a light-source drive circuit 51.

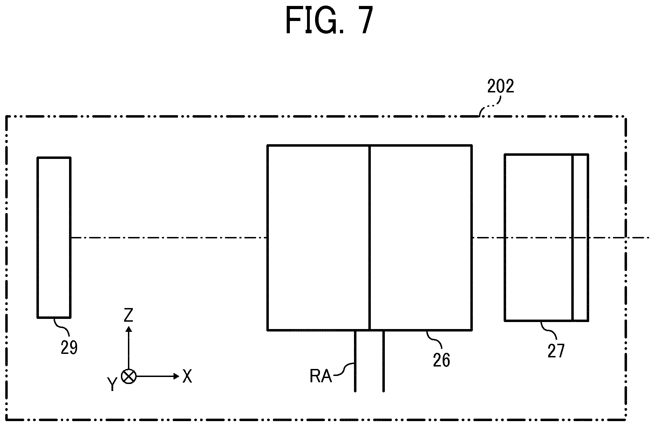

As illustrated in FIG. 6 and FIG. 7, the light detection system 202 includes, for example, a second rotating mirror 26, a second reflecting mirror 27, an imaging lens 28, and a light detector 29.

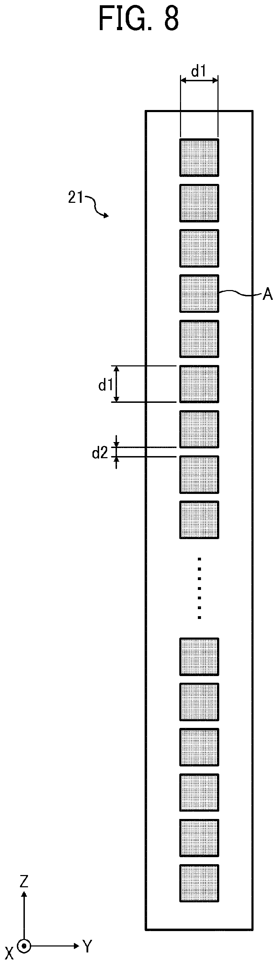

As illustrated in FIG. 8 N light emitting areas A of the light source 21 are arranged for example at regular intervals in the Z-axis direction. In the present embodiment, each of the light emitting areas A is square-shaped where the length of each side is d1. The gap between two neighboring light emitting areas A is d2. The N light emitting areas A are selectively driven by the light-source drive circuit 51.

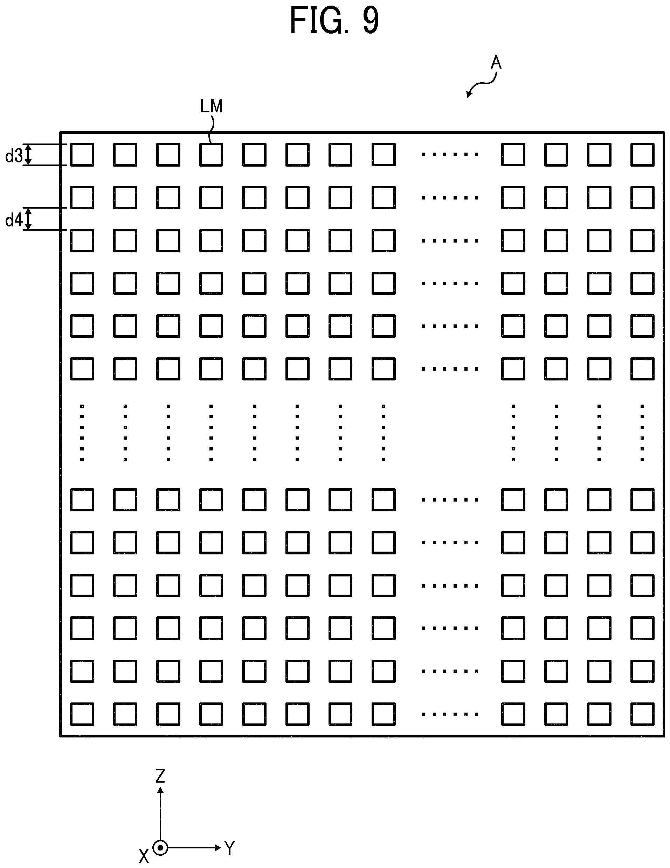

As illustrated in FIG. 9 for example, a plurality of light-emitting units LM are two-dimensionally arranged in each of the light emitting areas A. In the present embodiment, each of the light-emitting units LM is square-shaped where the length of each side is d3. The gap between two neighboring light-emitting units LM is d4. The above-described length d1 is determined by the number of the light-emitting units LM that are included in a light emitting area A.

Each of the light-emitting units LM is a vertical cavity-surface emitting laser (VCSEL). In other words, each light emitting area A is a vertical cavity-surface emitting laser array (VCSEL array) and the light source 21 is a group of the VCSEL arrays. The light-emitting units LM are switched on and off by the object information acquisition unit 203. Each of the switched-on light-emitting units LM emits light in the +X direction.

The coupling lens 22 is arranged on the +X side of the light source 21. Alternatively, in some embodiments, the coupling lens 22 may be replaced with a coupling optical system that has equivalent capabilities and includes a plurality of optical elements.

The first reflecting mirror 23 reflects the light that has passed through the coupling lens 22 toward the first rotating mirror 24.

The first rotating mirror 24 has a plurality of specular surfaces (reflection planes) that rotate around a rotation axis RA of the first rotating mirror 24 parallel to the Z axis, and scans with the light from the first reflecting mirror 23 along the Y-axis direction. Each of the specular surfaces of the first rotating mirror 24 is parallel to the rotation axis RA. In the present embodiment, the first rotating mirror 24 has four specular surfaces. The object information acquisition unit 203 controls the rotation of the first rotating mirror 24. The light that is reflected by the specular surfaces of the first rotating mirror 24 is the detection light that is emitted from the laser radar 20.

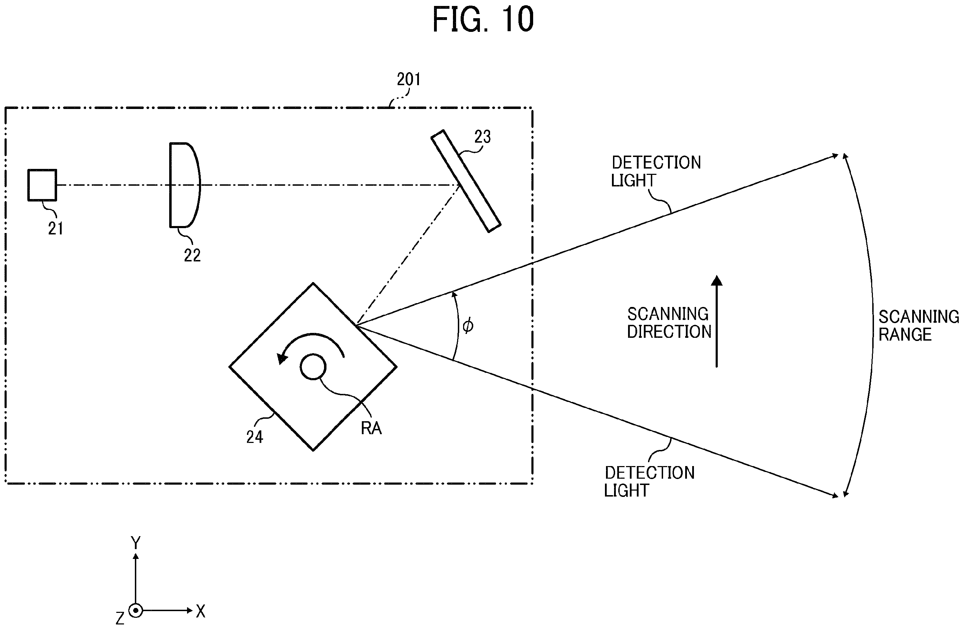

As illustrated in FIG. 10 for example, when the first rotating mirror 24 rotates, the detection light path changes on a plane orthogonal to the Z-axis direction. Accordingly, the detection light scans along the Y-axis direction with the rotation of the first rotating mirror 24. In the present embodiment, the detection light scans in the +Y direction.

The light emission system 201 is also referred to as an "optical scanning system".

In the following description, the angle φ formed by the detection light path that is directed to an edge on the -Y side of the scanning area and the detection light path that directed to an edge on the +Y side of the scanning area, on the plane orthogonal to the Z axis, may be referred to as a scanning angle (see FIG. 10).

When an object is present in the detection field, a part of the light emitted from the laser radar 20 and reflected from the object returns to the laser radar 20. In the following description, the light that is reflected from the object and returns to the laser radar 20 may be referred to simply as light reflected from an object.

The second reflecting mirror 26 has a plurality of specular surfaces (reflection planes) that rotate around a rotation axis RA of the second reflecting mirror 26 parallel to the Z axis, and reflects the light from the object toward the second reflecting mirror 27. Each of the specular surfaces of the second rotating mirror 26 is parallel to the rotation axis RA. In the present embodiment, the second rotating mirror 26 has four specular surfaces. The object information acquisition unit 203 controls the rotation of the second rotating mirror 26.

The object information acquisition unit 203 controls the first rotating mirror 24 and the second rotating mirror 26 to synchronize with each other and have the same rotation angle. Each of the first rotating mirror 24 and the second rotating mirror 26 is provided with a sensor (for example, a Hall effect sensor) that detects the rotation angle, and the output signal from each sensor is sent to the object information acquisition unit 203. In other words, the object information acquisition unit 203 obtains the rotation angles of the first rotating mirror 24 and the second rotating mirror 26 based on the output signals from the sensors of the first rotating mirror 24 and the second rotating mirror 26.

The second reflecting mirror 27 reflects the light from the second rotating mirror 26 in the -X direction. The imaging lens 28 is arranged on the -X side of the second reflecting mirror 27, and collects and condenses the light reflected by second reflecting mirror 27.

The light detector 29 receives the light that has passed through the imaging lens 28, and outputs a signal according to the amount of the received light to the object information acquisition unit 203.

The light detection system 202 is also referred to as a "light-receiving system".

The object information acquisition unit 203 determines that the light detector 29 has received the light reflected from an object when the output level of the light detector 29 becomes greater than or equal to a prescribed threshold. As the light receiving element of the light detector 29, an avalanche photo diode (APD) or a pin photodiode (PD) may be used.

The object information acquisition unit 203 switches on and off the light source 21, and controls the driving of the first rotating mirror 24 and the second rotating mirror 26. The object information acquisition unit 203 acquires object information regarding whether an object is present, based on the signal output from the light detector 29. When it is determined that an object is present, the object information acquisition unit 203 acquires object information including the distance to the object, based on the timing of light emission at the light source 21 and the timing of light reception at the light detector 29.

<First Example Arrangement of Coupling Lens and Imaging Lens>

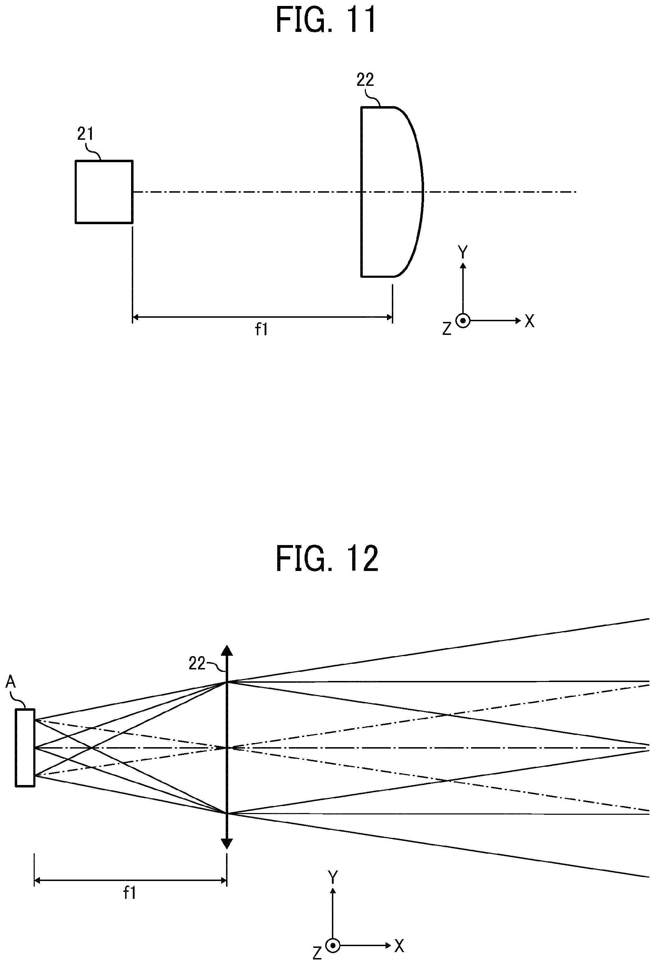

In the first example arrangement, as illustrated in FIG. 11, the coupling lens 22 is disposed in the X-axis direction such that the distance from the light source 21 coincides with the focal length (f1) of the coupling lens 22.

The light emitted from one of the light-emitting units LM of the light source 21 is approximately collimated by the coupling lens 22. However, in the present embodiment, a plurality of light-emitting units LM included in each light emitting area A simultaneously emits light so that the light emitted from each of the light emitting areas A becomes diverging light after passing through the coupling lens 22 (see FIG. 12). As a result, a conjugate image of the light source 21 is formed at infinity by the coupling lens 22.

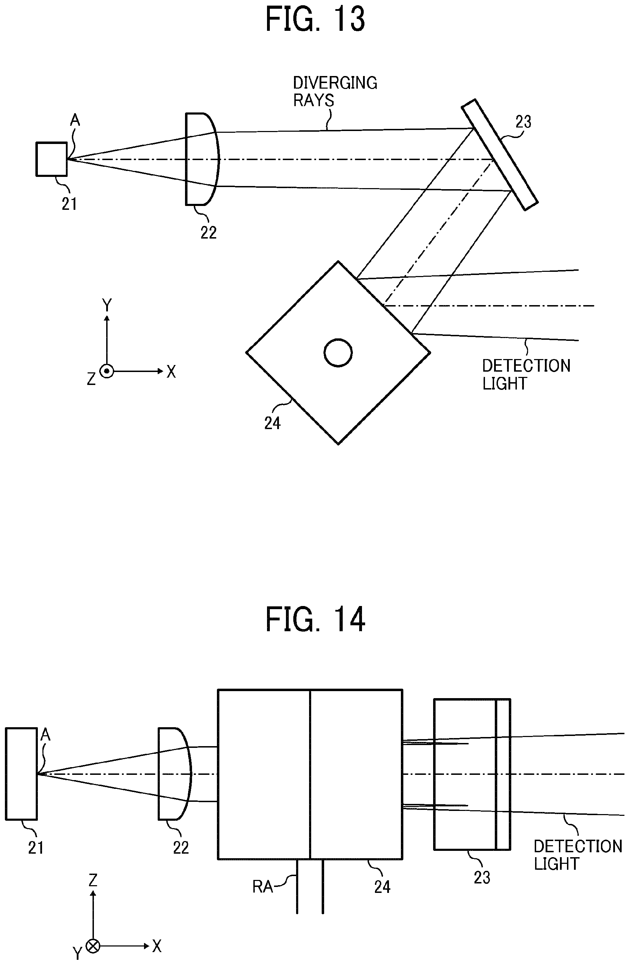

FIGS. 13 and 14 each illustrates an example of the optical path of the light emitted from one of the light emitting areas A of the light source 21.

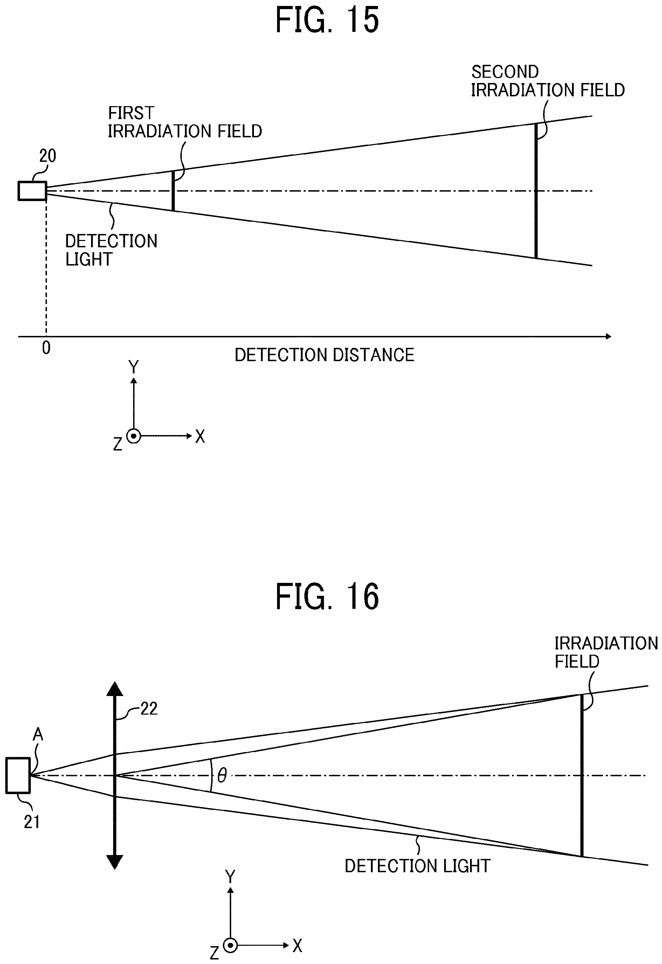

As the detection light emitted from the laser radar 20 is diverging light, as illustrated in FIG. 15 for example, the size of the irradiated field of the detection light varies with the detection distance. In the following description, for sake of simplification, the irradiated field of the detection light may be referred to simply as irradiated field.

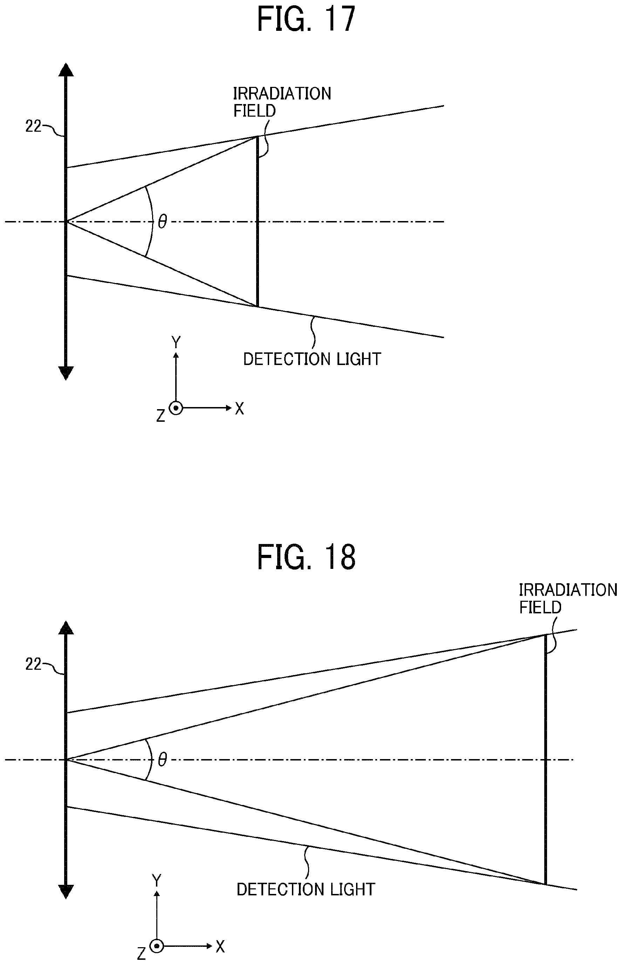

As illustrated in FIG. 16 for example, in the present embodiment, the angle of divergence θ of the irradiated field where the center of the coupling lens 22 is the viewpoint is defined to be the glancing angle. As illustrated in FIG. 17 and FIG. 18, the glancing angle θ becomes greater as the detection distance is smaller.

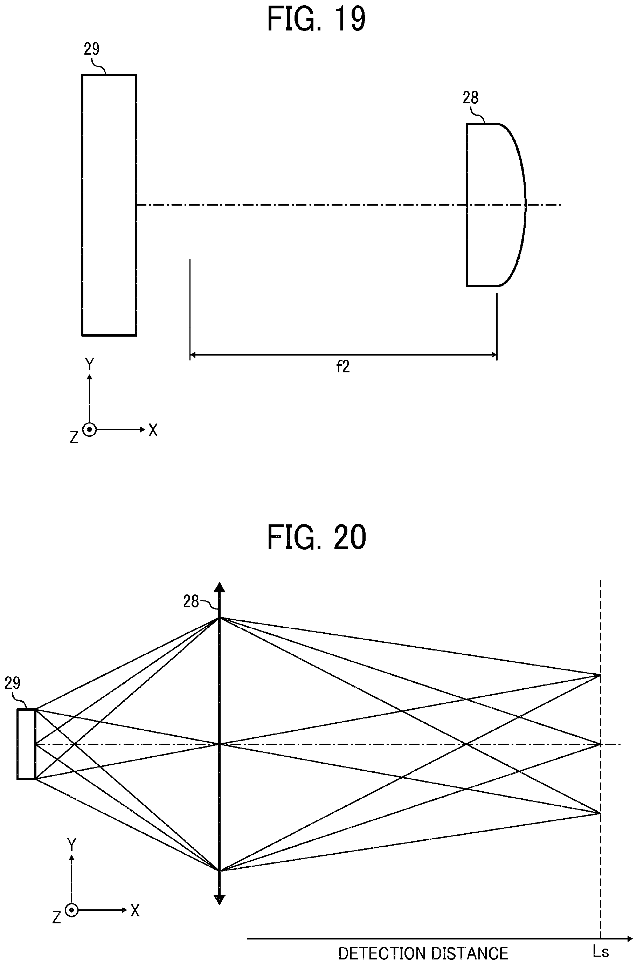

As illustrated in FIG. 19, the imaging lens 28 is disposed in the X-axis direction such that the distance from the light detector 29 is longer than the focal length (f2) of the imaging lens 28. Assuming that the light detector 29 is the object point, as illustrated in FIG. 20, the imaging lens 28 is arranged such that a conjugate image of the light detector 29 is formed by the imaging lens 28 at a position at which the distance from the laser radar 20 in the X-axis direction is $L_s$. In other words, the position at which the distance from the laser radar 20 in the X-axis direction is $L_s$ indicates the position at which a conjugate image of the light detector 29 is formed by the imaging lens 28. In the present embodiment, the length of $L_s$ is equal to 80m for example.

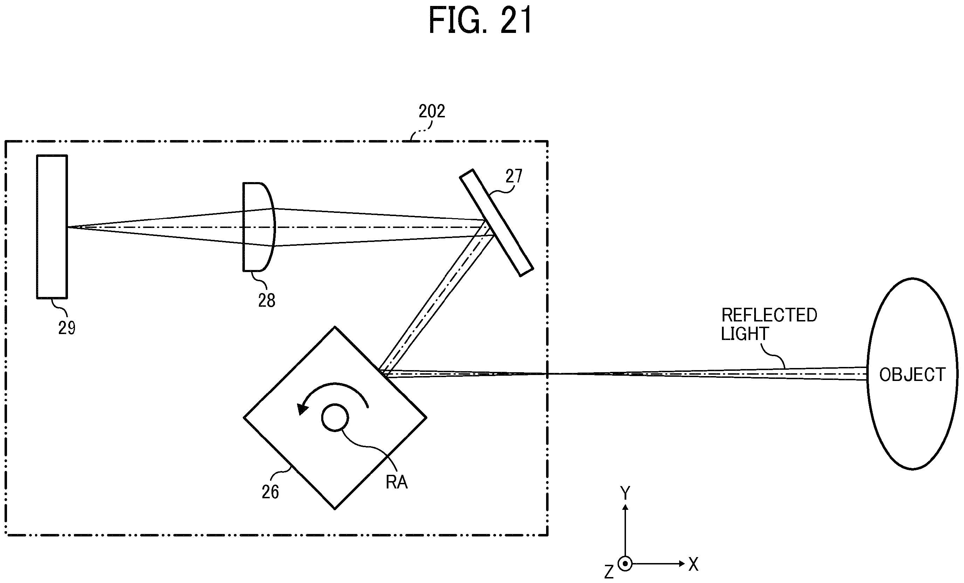

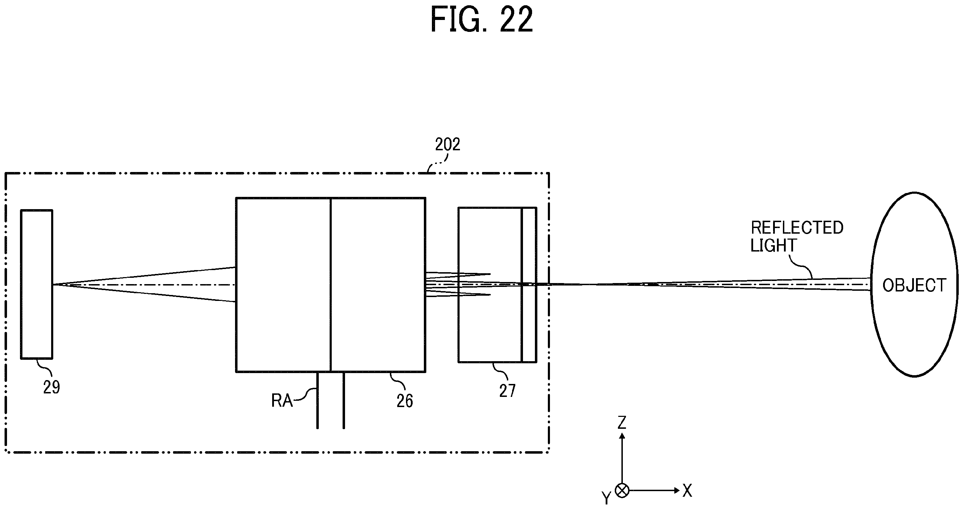

FIG. 21 and FIG. 22 are diagrams illustrating an example of the optical path of the light reflected from an object according to an embodiment of the present invention. In the first example arrangement, the coupling lens 22 and the imaging lens 28 are arranged such that a conjugate image of the light source 21 is formed at infinity and a conjugate image of the light detector 29 is formed in the proximity of the laser radar 20.

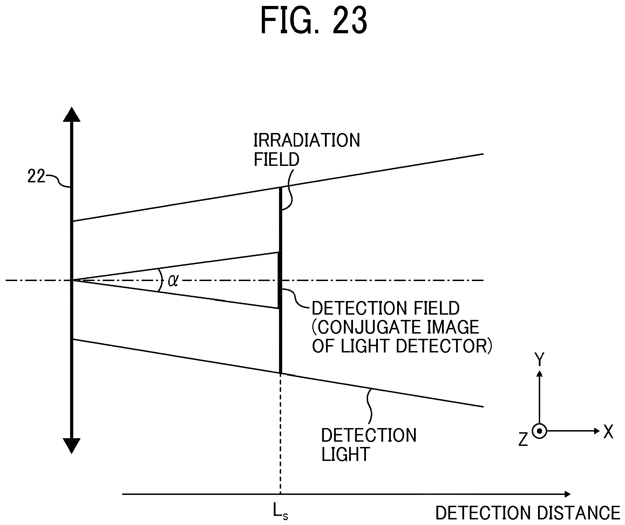

For example, as illustrated in FIG. 23, the light reflected from an object is received by the light detector 29 when the distance between the object and the laser radar 20 in the X-axis direction is $L_s$ and the object is placed within the conjugate image of the light detector 29 in the Y-axis direction. In this example, the field in which a conjugate image of the light detector 29 is formed is the detection field.

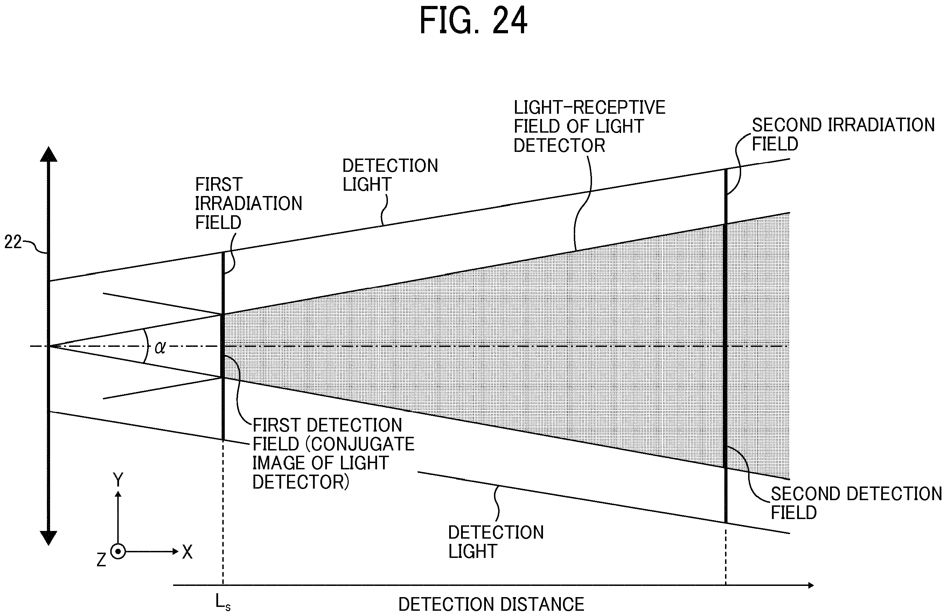

In the present embodiment, the angle of divergence $\alpha$ of the detection field where the center of the coupling lens 22 is the viewpoint is defined to be the detection angle. As illustrated in FIG. 24, the detection angle $\alpha$ is almost constant when the detection distance is longer than or equal to the distance of $L_s$. Within the range of a desired detection distance to the laser radar 20, the dimension of the detection field is smaller than the dimension of the irradiation area. Accordingly, the detection of the laser radar 20 according to the embodiment of the present disclosure achieves an improved resolution of detection.

When the detection distance is shorter than the distance of $L_s$, the dimension of the detection field becomes larger than the dimension of the detection field with the detection distance of equal to the distance of $L_s$. In other words, the dimension of the detection field becomes the smallest at the position at which the detection distance is equal to the distance of $L_s$. Accordingly, the distance of $L_s$ may be set as a shortest detection distance. In such cases, the object information acquiring processes (e.g., various kinds of computing) at the object information acquisition unit 203 may be simplified.

<Second Example Arrangement of Coupling Lens and Imaging Lens>

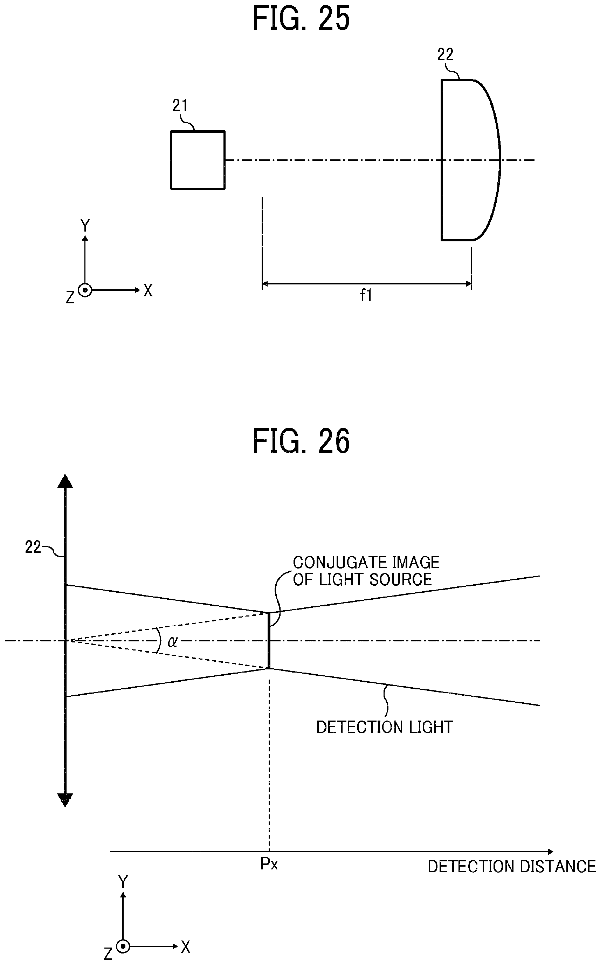

In the second example arrangement, as illustrated in FIG. 25, the coupling lens 22 is disposed in the X-axis direction such that the distance from the light source 21 becomes greater than the focal length f1 of the coupling lens 22. As illustrated in FIG. 26, the coupling lens 22 is disposed in the X-axis direction such that a conjugate image of the light source 21 is formed by the coupling lens 22 at the position at which the detection distance is $L_s$.

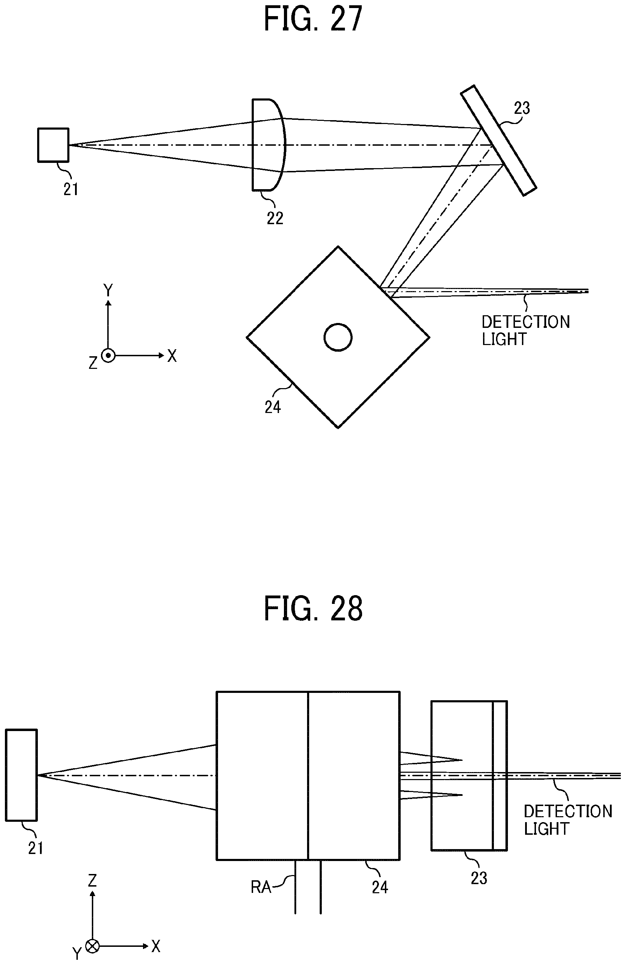

FIG. 27 and FIG. 28 are diagrams illustrating an example of the optical path of the light emitted from one of the light emitting areas A of the light source 21 in the second example arrangement of the present embodiment.

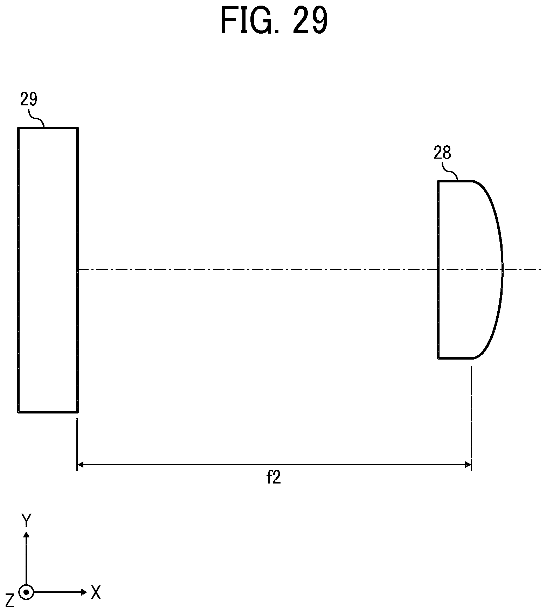

As illustrated in FIG. 29, the imaging lens 28 is disposed in the X-axis direction such that the distance between the light detector 29 and the imaging lens 28 coincides with the focal length f2 of the imaging lens 28.

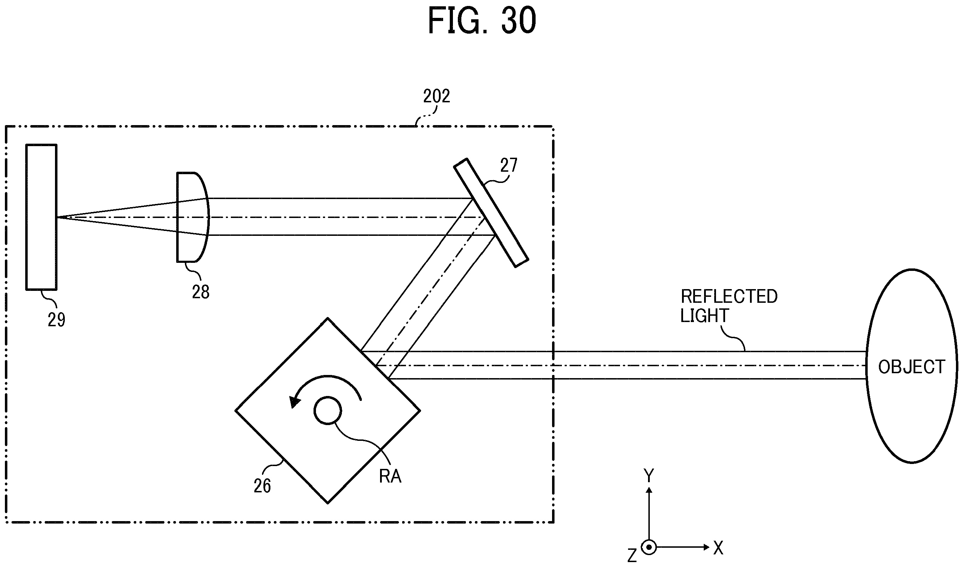

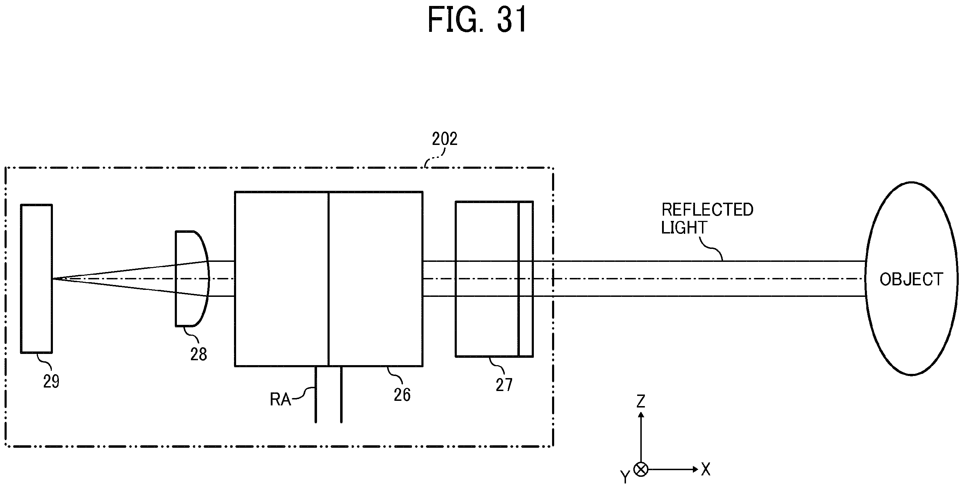

FIG. 30 and FIG. 31 are diagrams illustrating an example of the optical path of the light reflected from an object in the second example arrangement of the present embodiment. In the second example arrangement, the coupling lens 22 and the imaging lens 28 are arranged such that a conjugate image of the light source 21 is formed in the proximity of the laser radar 20 and a conjugate image of the light detector 29 is formed at infinity.

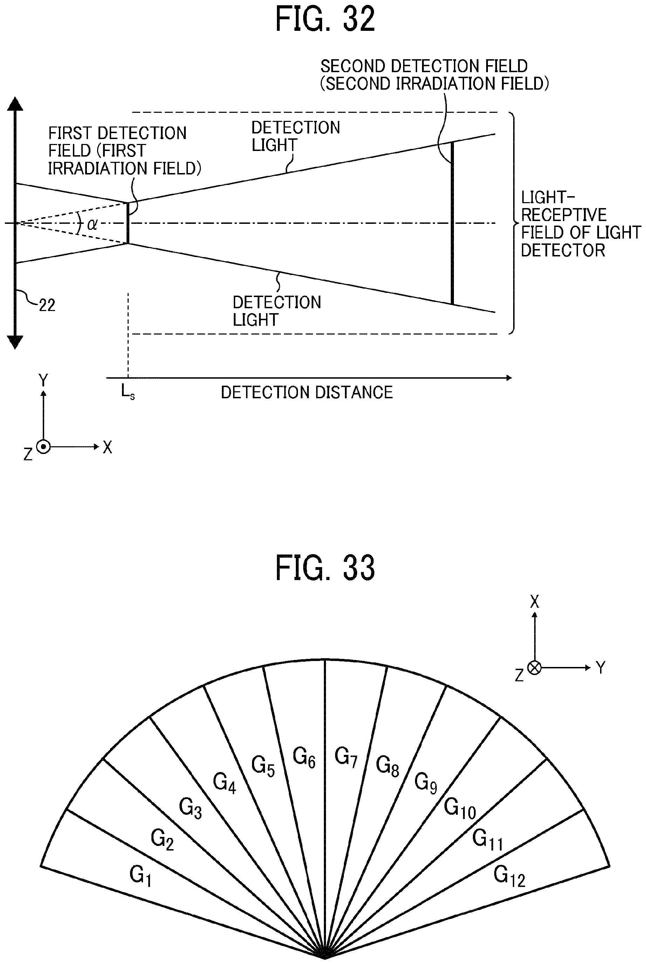

FIG. 32 is a diagram illustrating the relation between detection light and a light-receptive field of the light detector 29 in the second example arrangement of the present embodiment. In the second example arrangement, all the light reflected from an object can be received by the light detector 29. In other words, the irradiated field coincides with the detection field.

The dimension of the detection field in the second example arrangement is equivalent to the dimension of the detection field in the first example arrangement. The second example arrangement also exhibits the same effects as the above-described first example arrangement does.

Note that the field in which an object is detectable is a field where an image of the light source 21 (such an image may be referred to as a light source image in the following description) overlaps with an image of the light detector 29 (such an image may be referred to as a light detector image in the following description). Even if an object is placed inside the field of a light source image as in the first example arrangement, the light reflected from an object is not guided to the light detector 29 when the object is outside the field of a light detector image. As a result, the object is not detected the laser radar 20. Moreover, even if an object is placed inside the field of a light detector image as in the second example arrangement, the object is not irradiated with the light emitted from the light source 21 (detection light) when the object is outside the light source image. Accordingly, no light is reflected from the object and thus no light is detectable by the light detector 29.

<First Example Configuration of Light Source - not forming part of the invention>

In the first example configuration not forming part of the invention, the light source 21 includes one light emitting area A. In the embodiments described above, a hundred light-emitting units LM are arranged in the Y-axis direction and a hundred light-emitting units LM are arranged in the Z-axis direction in the light emitting area A. Thus, the light emitting area A includes ten-thousand ($= 100 \times 100$) light-emitting units LM. The length d2 is approximately 0.02 mm, the length d3 is approximately 0.7 $\mu$m, and the length d4 is approximately 1 $\mu$m. In such a case, even if the power of the light emission at one light-emitting unit LM is 1 milli-watt (mW), ten-thousand light-emitting units LM are integrated to form a single light emitting area A with the power of the light emission at 10 W.

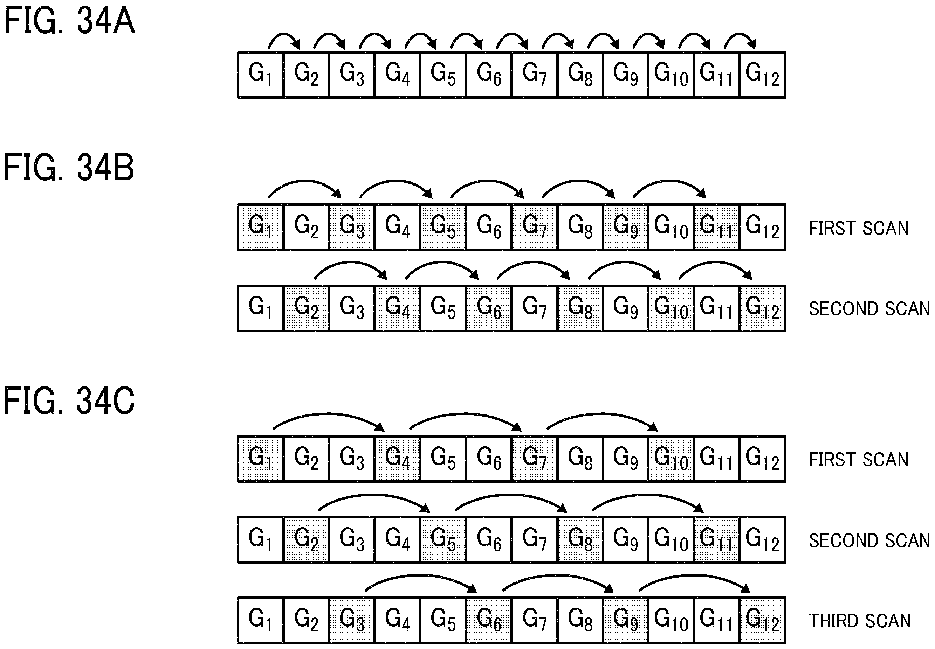

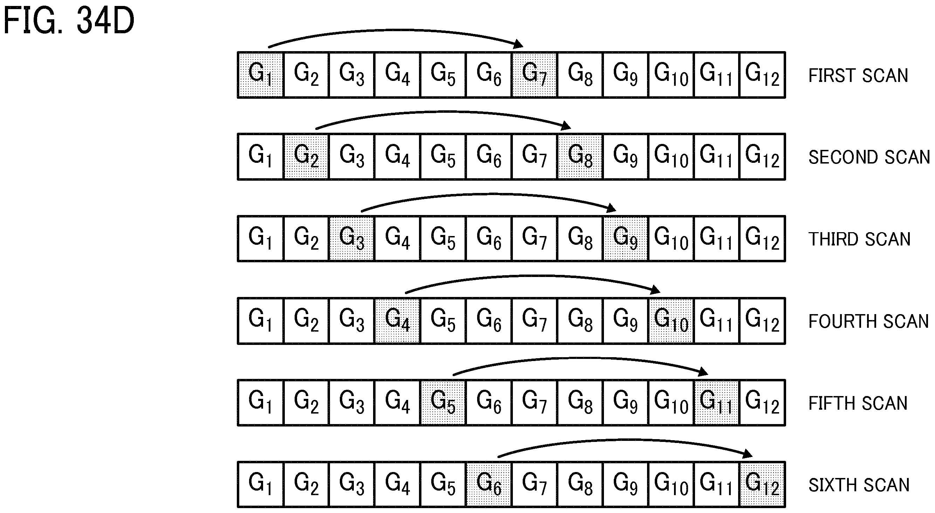

FIG. 33 illustrates the scanning angle $\varphi$(or a scanning range as a detection field G) of FIG. 10 that is divided into twelve detection fields $G_1$ through $G_{12}$. Examples of a detection sequence to acquire the distance information regarding an object that exists within each of the detection fields $G_1$ through $G_{12}$ include a detection sequence A, a detection sequence B, a detection sequence C (refer to FIG. 34C), and a detection sequence D (refer to FIG. 34D). According to the detection sequence a in which one scan is performed, the one scan is performed during which the detection fields $G_1$, $G_2$, $G_3$, $G_4$, $G_5$, $G_6$, $G_7$, $G_8$, $G_9$, $G_{10}$, $G_{11}$, and $G_{12}$ are de-

tected in the recited order (refer to FIG. 34A). According to the detection sequence B in which two scans are performed, the first scan is performed during which the detection fields $G_1$, $G_3$, $G_5$, $G_7$, $G_9$, and $G_{11}$ are detected in the recited order, and then the second scan is performed in which the detection fields $G_2$, $G_4$, $G_6$, $G_8$, $G_{10}$, and $G_{12}$ are detected in the recited order (refer to FIG. 34B). According to the detection sequence C in which three scans are performed, a first scan is performed during which the detection fields $G_1$, $G_4$, $G_7$, and $G_{10}$ are detected in the recited order, a second scan is performed during which the detection fields $G_2$, $G_5$, $G_8$, and $G_{11}$ are detected in the recited order, and a third scan is performed during which the detection fields $G_3$, $G_6$, $G_9$, and $G_{12}$ are detected in the recited order (refer to FIG. 34C). According to the detection sequence d in which six scans are performed, a first scan is performed during which the detection fields $G_1$ and $G_7$ are detected in the recited order, a second scan is performed during which the detection fields $G_2$ and $G_8$ are detected in the recited order, and a third scan is performed during which the detection fields $G_3$ and $G_9$ are detected in the recited order. Then, a fourth scan is performed during which the detection fields $G_4$ and $G_{10}$ are detected in the recited order, a fifth scan is performed during which the detection fields $G_5$ and $G_{11}$ are detected in the recited order, and a sixth scan is performed during which the detection fields $G_6$ and $G_{12}$ are detected in the recited order (refer to FIG. 34D).

A time interval of detection (hereinafter referred to simply as "detection time" in some cases) between a certain detection field and a subsequent detection field is $T / 12$ in the detection sequence a, $T / 6$ in the detection sequence b, $T / 4$ in the detection sequence c, and $T / 2$ in the detection sequence d where a time period of scan of the scanning range is T.

Shortening such a detection time to any extent is difficult. This is because, when according to a not-claimed example one light detector 29 is employed, a subsequent detection to detect another object that is present within another detection field to be subsequently detected has to wait (for the round-trip time of light of the current detection) until the light emitted to and reflected from an object that is present within a current detection field returns to the light detector 29. When light beams emitted from the plurality of light-emitting areas A are particularly labeled according to different wavelengths or amplitudes, a light-receiving unit can recognize which detection field the received light returns from. Such design ideas, however, increase the costs and size of an object detector (laser radar 20). When the object detector (laser radar 20) is installed in a vehicle 1, an increase in size of the object detector undesirably leads to significant changes in design of the vehicle 1.

Such constraint that is referred to as the first constraint is $T / 12 > 2L_{max}/d$ in the detection sequence a and $T / 6 > 2L_{max}/c$ in the detection sequence b, $T / 4 > 2L_{max}/c$ in the detection sequence c, and $T / 2 > 2L_{max}/c$

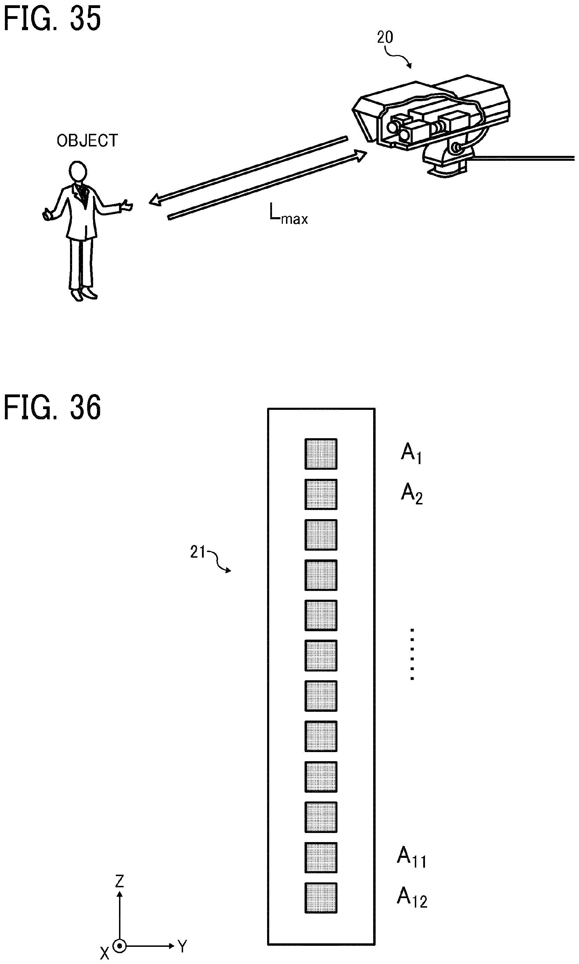

in the detection sequence d, where the maximum detection distance from the object detector (laser radar 20) to an object is $L_{max}$ and the speed of light is c ($3 \times 10^8$ m/s) (refer to FIG. 35).

The maximum detection distance $L_{max}$ is a maximum distance with which an object is detectable by the laser radar 20. That is, with the maximum detection distance $L_{max}$ to an object, the light detector 29 can detect the object with the minimum amount of light that is reflected from the object. Further, the maximum detection distance $L_{max}$ is set according to the specs of the object detector (laser radar 20). The maximum detection distance $L_{max}$ is approximately determined by the output of the light source 21 and the detection sensitivity of the light detector 29.

In this case, T is expressed by $\varphi/\omega$ where $\omega$ is an angular speed of the first rotating mirror 24 in FIG. 4.

More specifically about an example design for the object detector, the first rotating mirror 24 of 36000 rotation per minute (rpm) is used, the scanning angle $\varphi$ of 140° is divided by 0.25°, that is, there are detection fields $G_1$ through $G_{560}$, and an object to be detected is disposed at a position at which the maximum detection distance is 200 m. With such an object detector, according to detection sequence ($\alpha$), one scan is performed in which detection fields $G_1$, $G_2$, ... $G_{559}$, and $G_{560}$ are detected in the recited order and the detection time between a certain detection field and a subsequent detection field is 1.16 $\mu$s. Further, according to detection sequence ($\beta$), a first scan is performed in which the detection fields $G_1$, $G_5$, ...$G_{553}$, and $G_{557}$ are detected in the recited order, and then a second scan is performed in which the detection field $G_2$, $G_6$, ..., $G_{554}$, and $G_{558}$ are detected in the recited order, a third scan is performed in which the detection fields $G_3$, $G_7$, ..., $G_{555}$, and $G_{559}$ are detected in the recited order, and a fourth scan is performed in which the detection fields $G_4$, $G_8$, ..., $G_{556}$, and $G_{560}$ are detected in the recited order. In the detection sequence ($\beta$), the detection time between a certain detection field and a subsequent detection field is 4.63 $\mu$s. In consideration of constrain time of 1.33 $\mu$s, obtaining the distance information of all of the detection fields $G_1$ through $G_{560}$ is impossible according to the detection sequence ($\alpha$).

<Second Example Configuration of Light Source>

In the second example configuration, the light source 21 includes twelve light emitting areas A. The following description is directed to cases in which the scanning angle $\varphi$ is divided into twelve detection fields $G_1$ through $G_{12}$ as in FIG. 33.

Note that when the twelve light emitting areas A are distinguished from each other as illustrated in FIG. 36, the light emitting areas A are noted as $A_1$, $A_2$, $A_3$, ...$A_{11}$, and $A_{12}$ in order from + Z side to - Z side, that is, noted as Ai ($1 \le i \le 12$).

The second example configuration is a configuration in which the distance information in the Z-axis direction is added to the first example configuration. In such cases, as a representative of the detection sequence a to acquire the distance information of an object that is present within each detection field, a detection sequence (a-1) is performed in which the light emitting areas A are sequentially switched on to irradiate each of the detection fields in one scan.

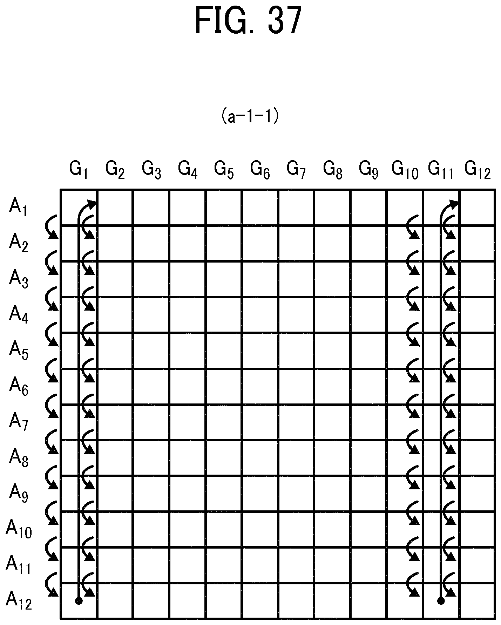

In detection sequence (a-1-1) as a specific example not forming part of the invention, one scan is performed in which the detection fields $G_1$, $G_2$, $G_3$, $G_4$, $G_5$, $G_6$, $G_7$, $G_8$, $G_9$, $G_{10}$, Gn, and $G_{12}$ are irradiated (detected) with light sequentially emitted from the twelve light emitting areas A in the recited order. During a time period of T / 12 that is the time interval of detection between the detection field $G_1$ and the detection field $G_2$ (hereinafter, referred to simply as a time period of T / 12 between the detection field $G_1$ and the detection field $G_2$), in arrangements not within the scope of the claims, the light emitting areas $A_1$ through $A_{12}$ sequentially emit light (detection light) to the detection field $G_1$. During another time period of T / 12 between the detection field $G_2$ and the detection field $G_3$, in arrangements not within the scope of the claims, the light emitting areas $A_1$ through $A_{12}$ sequentially emit light to the detection field $G_2$, ... (the same repeats on the detection fields $G_3$ through $G_{11}$) ..., the light emitting areas $A_1$ through $A_{12}$ sequentially emit light to the detection field $G_{11}$ during the time period of T / 12 between the detection field $G_{11}$ and the detection field $G_{12}$ (refer to FIG. 37).

In some embodiments, instead of the detection sequence (a-1) in which all of the light emitting areas A sequentially emit light during each time period T / 12, a part (some) of the light emitting areas A sequentially emits light to each detection field G in each scan.

As a detection sequence (a-2) for example, a half of the light emitting areas A emits light to each detection field in the first scan, and then the remaining half of the light emitting areas A emits light to each detection field in the second scan.

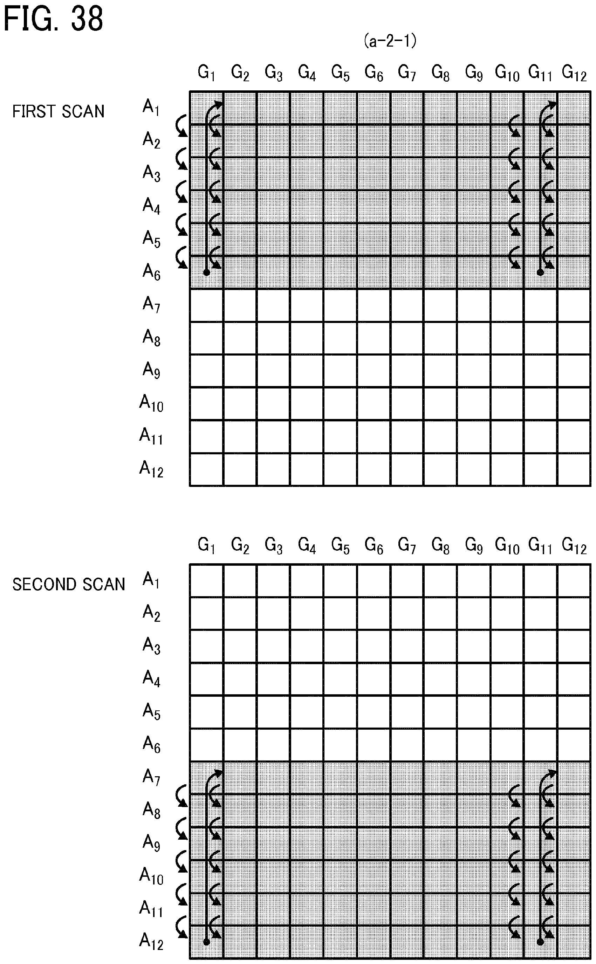

In a detection sequence (a-2-1) as a specific example of the detection sequence (a-2), not within the scope of the claims, in the first scan, the light emitting areas $A_1$ through $A_6$ sequentially emit light during a time period of T / 12 between the detection field $G_1$ and the detection field $G_2$, and then the light emitting areas $A_1$ through $A_6$ sequentially emit light during a time period of T / 12 between the detection field $G_2$ and the detection field $G_3$, ... (the same repeats on the detection fields $G_3$ through $G_{11}$) ..., the light emitting areas $A_1$ through $A_6$ sequentially emit light during a time period of T / 12 between the detection field $G_{11}$ and the detection field $G_{12}$. In the second scan, the light emitting areas $A_7$ through $A_{12}$ sequentially emit light during a time period of T / 12 between the detection field $G_1$ and the detection field $G_2$, and then the light emitting areas $A_7$ through $A_{12}$ sequentially emit light during a time period of T / 12 between the detection field $G_2$ and the detection field $G_3$, ... (the same repeats on the detection fields $G_3$ through $G_{11}$) ..., the

light emitting areas $A_7$ through $A_{12}$ sequentially emit light during a time period of T / 12 between the detection field $G_{11}$ and the detection field $G_{12}$ (refer to FIG. 38).

That is, according to the detection sequence (a-2-1), the upper half of the light emitting areas A sequentially emit light to each detection field in the first scan, and the lower half of the light emitting areas A sequentially emit light to each detection field in the second scan.

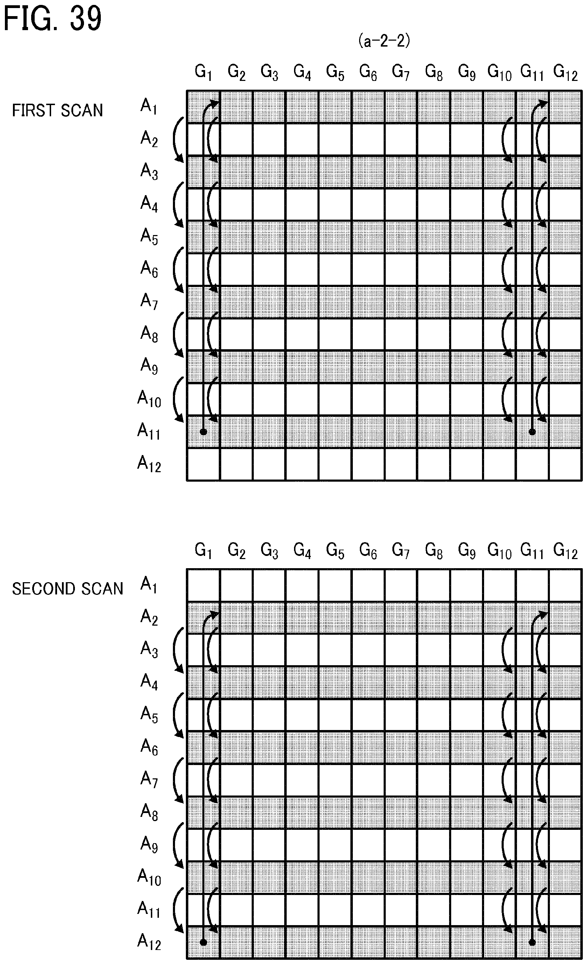

According to a detection sequence (a-2-2) as another specific example of the detection sequence (a-2), not within the scope of the claims, in the first scan, the light emitting areas $A_1$, $A_3$, $A_5$, $A_7$, $A_9$, and $A_{11}$ sequentially emit light in the recited order during a time period of T / 12 between detection field $G_1$ and the detection field $G_2$, and then the light emitting areas $A_1$, $A_3$, $A_5$, $A_7$, $A_9$, and $A_{11}$ sequentially emit light in the recited order during a time period of T / 12 between the detection field $G_2$ and the detection field $G_3$, ... (the same repeats on the detection fields $G_3$ through $G_{11}$) ..., the light emitting areas $A_1$, $A_3$, $A_5$, $A_7$, $A_9$, and $A_{11}$ sequentially emit light in the recited order during a time period of T / 12 between the detection field $G_{11}$ and the detection field $G_{12}$. In the second scan, the light emitting areas $A_2$, $A_4$, $A_6$, $A_8$, $A_{10}$, and $A_{12}$ sequentially emit light in the recited order during a time period of T / 12 between the detection field $G_1$ and the detection field $G_2$, the light emitting areas $A_2$, $A_4$, $A_6$, $A_8$, $A_{10}$, and $A_{12}$ sequentially emit light in the recited order during a time period of T / 12 between the detection field $G_2$ and the detection field $G_3$, ... (the same repeats on the detection fields $G_3$ through $G_{11}$), ... the light emitting areas $A_2$, $A_4$, $A_6$, $A_8$, $A_{10}$, and $A_{12}$ sequentially emit light in the recited order during a time period of T / 12 between the detection field $G_{11}$ and the detection field $G_{12}$, (refer to FIG. 39).

That is, according to the detection sequence (a-2-2), every other light emitting area A among the half of the light emitting areas A emits light to each detection field in the first scan, and then every other light emitting area A of the remaining half light emitting areas A emits light to each detection field in the second scan.

In some embodiments, according to a detection sequence (a-3) for example, which is not within the scope of the claims, one third of the light emitting areas A sequentially emits light to each detection field in the first scan, another one third sequentially emits light to each detection field in the second scan, and the remaining one third sequentially emits light to each detection field in the third scan.

According to a detection sequence (a-3-1) as a specific example of the above-described detection sequence (a-3), the light emitting areas $A_1$, $A_4$, $A_7$, and $A_{10}$ sequentially emit lights in the recited order during a time period of T / 12 between the detection field $G_1$ and the detection field $G_2$, the light emitting areas $A_1$, $A_4$, $A_7$, and $A_{10}$ sequentially emit lights in the recited order during a time period of T / 12 between the detection field $G_2$ and the detection field $G_3$, ...(the same repeats on the detection fields $G_3$ through $G_{11}$) ..., and the light emitting areas

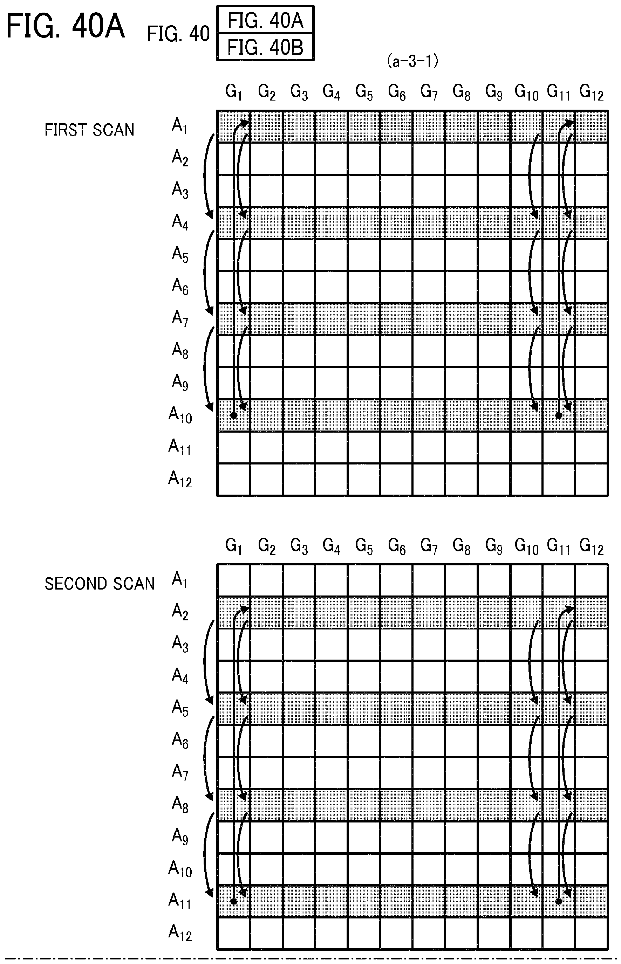

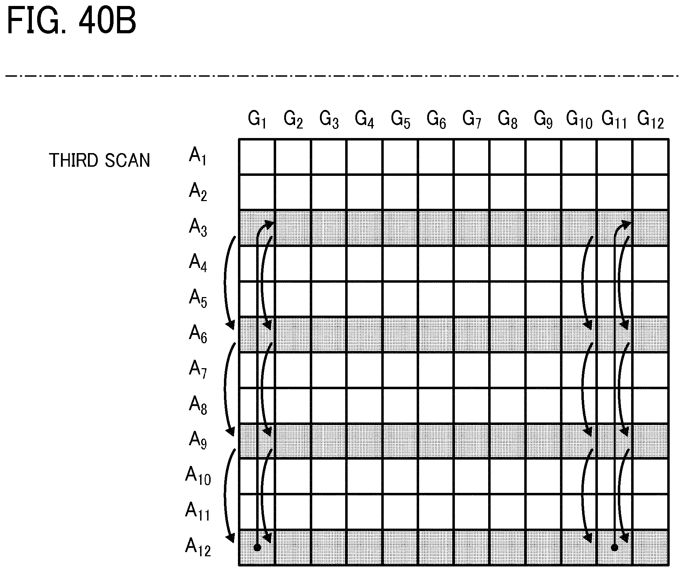

$A_1$, $A_4$, $A_7$, and $A_{10}$ sequentially emit light in the recited order during a time period of T / 12 between the detection field $G_{11}$ and the detection field $G_{12}$, in the first scan. Then, the light emitting areas $A_2$, $A_5$, $A_8$, and $A_{11}$ sequentially emit lights in the recited order during a time period of T / 12 between the detection field $G_1$ and the detection field $G_2$, the light emitting areas $A_2$, $A_5$, $A_8$, and $A_{11}$ sequentially emit lights in the recited order during a time period of T / 12 between the detection field $G_2$ and the detection field $G_3$, ... (the same repeats on the detection fields $G_3$ through $G_{11}$) ..., and the light emitting areas $A_2$, $A_5$, $A_8$, and $A_{11}$ sequentially emit light in the recited order during a time period of T / 12 between the detection field $G_{11}$ and the detection field $G_{12}$ in the second scan. Subsequently, the light emitting areas $A_3$, $A_6$, $A_9$, and $A_{12}$ sequentially emit lights in the recited order during a time period of T / 12 between the detection field $G_1$ and the detection field $G_2$, the light emitting areas $A_3$, $A_6$, $A_9$, and $A_{12}$ sequentially emit lights in the recited order during the time period T / 12 from a starting time of detecting detection field $G_2$ to a starting time of detecting detection field $G_3$, ... (the same repeats on the detection fields $G_3$ through $G_{11}$) ..., and the light emitting areas $A_3$, $A_6$, $A_9$, and $A_{12}$ sequentially emit light in the recited order during a time period of T / 12 between the detection field $G_{11}$ and the detection field $G_{12}$ in the third scan (refer to FIG. 40).

That is, according to the detection sequence (a-3-1), light emitting areas A among one third of the light emitting areas A emit light at intervals of two light emitting areas A to each detection field in the first scan, and light emitting areas A of another one third of the light emitting areas A emit light at intervals of two light emitting areas A to each detection field in the second scan. Subsequently, light emitting areas A of the remaining one third of the light emitting areas A emit light at intervals of two light emitting areas A to each detection field in the third scan.

According to a detection sequence (c-1) as a representative of the detection sequence c in the first example configuration, which is not within the scope of the claims, all of the light emitting areas A sequentially emit light to each of four detection fields in the first scan, and all of the light emitting areas A sequentially emit light to each of another four detection fields in the second scan. Subsequently, all of the light emitting areas A sequentially emit light to each of the remaining four detection fields in the third scan.

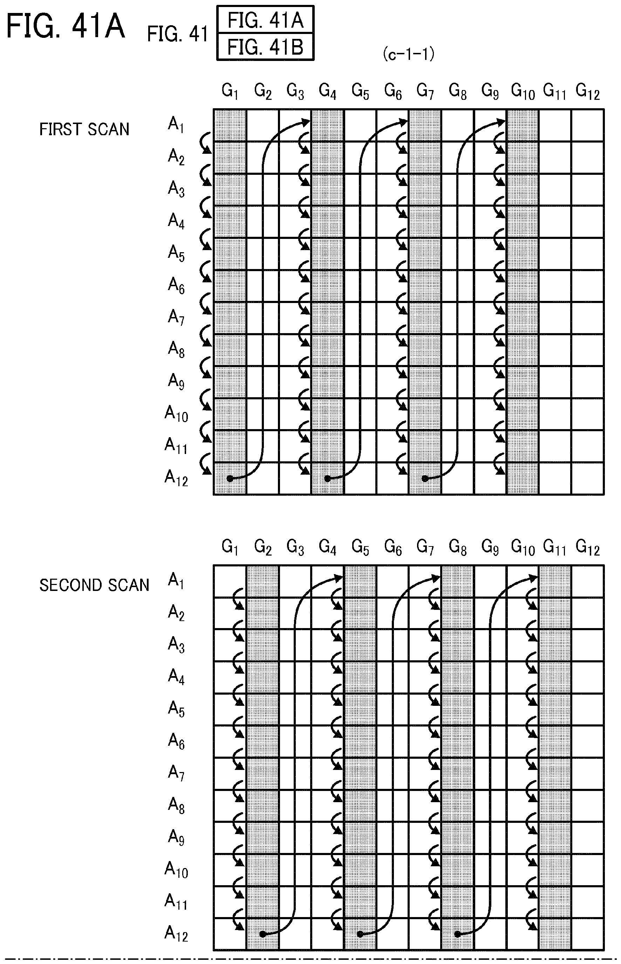

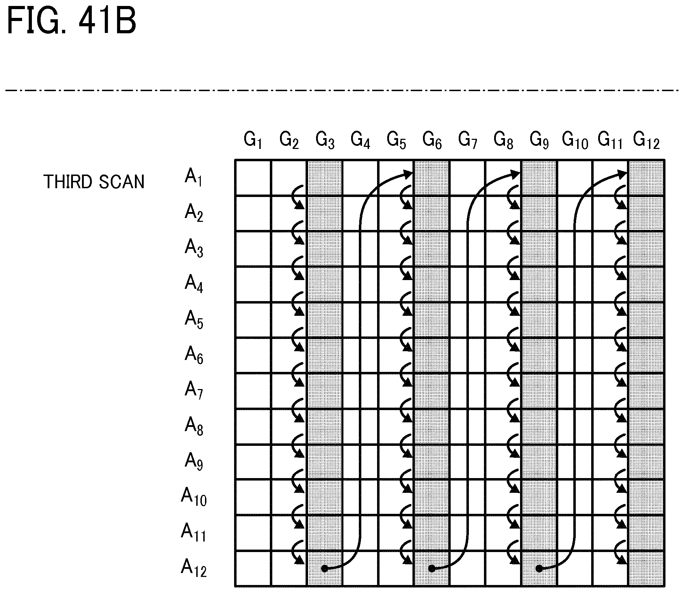

According to a detection sequence (c-1-1) as a specific example of the detection sequence (c-1), which is not within the scope of the claims, the light emitting areas $A_1$ through $A_{12}$ sequentially emit detection light to the detection field $G_1$ during a time period of T / 4 that is the time interval of detection between the detection field $G_1$ and the detection field $G_4$, the light emitting areas $A_1$ through $A_{12}$ sequentially emit detection light to the detection field $G_4$ during the time period T / 4 between the detection field $G_4$ and the detection field $G_7$, and the light emitting areas $A_1$ through $A_{12}$ sequentially emit light to the detection field $G_7$ during the time period T / 4 between the detection field $G_7$ and the detection field $G_{10}$ in the first scan. Subsequently, the light emitting areas $A_1$ through $A_{12}$ sequentially emit light to the detection field $G_2$ during the time period T / 4 between the detection field $G_2$ and the detection field $G_5$, the light emitting areas $A_1$ through $A_{12}$ sequentially emit light to the detection field $G_5$ during the time period T / 4 between the detection field $G_5$ and the detection field $G_8$, and the light emitting areas $A_1$ through $A_{12}$ sequentially emit light to the detection field $G_8$ during the time period T / 4 between the detection field $G_8$ and the detection field Gn in the second scan. Then, the light emitting areas $A_1$ through $A_{12}$ sequentially emit light to the detection field $G_3$ during the time period T / 4 between the detection field $G_3$ and the detection field $G_6$, the light emitting areas $A_1$ through $A_{12}$ sequentially emit light to the detection field $G_6$ during the time period T / 4 between the detection field $G_6$ and the detection field $G_9$, and the light emitting areas $A_1$ through $A_{12}$ sequentially emit light to the detection field $G_9$ during the time period T / 4 between the detection field $G_9$ and the detection field $G_{12}$ in the third scan (refer to FIG. 41).

In some embodiments, instead of the detection sequence (c-1) in which the all of the light emitting areas A sequentially emit light during each time period T / 4, a detection sequence (C-2) may be performed in which a part (some) of the light emitting areas A sequentially emits light to each detection field in each scan.

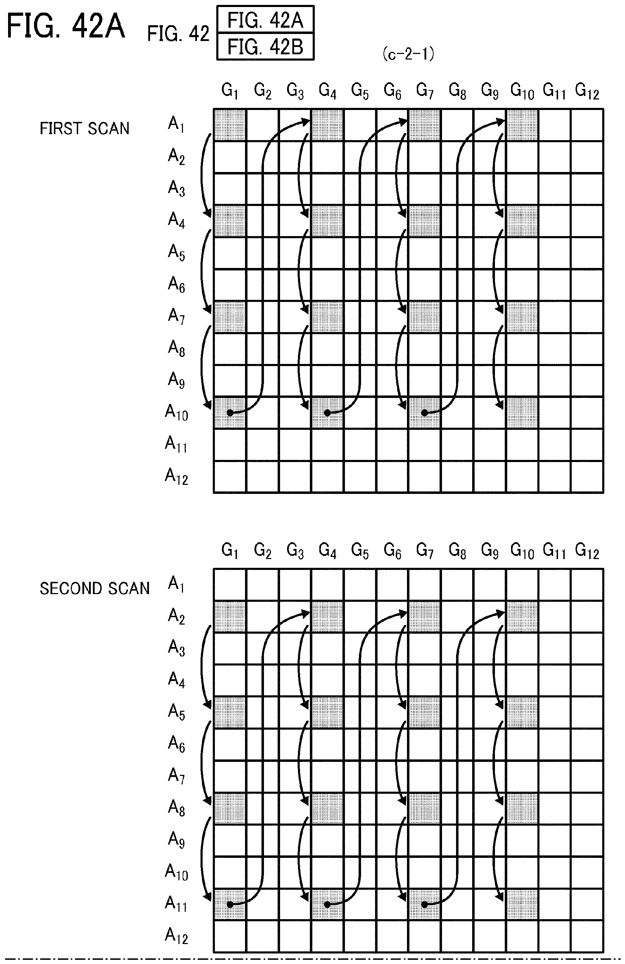

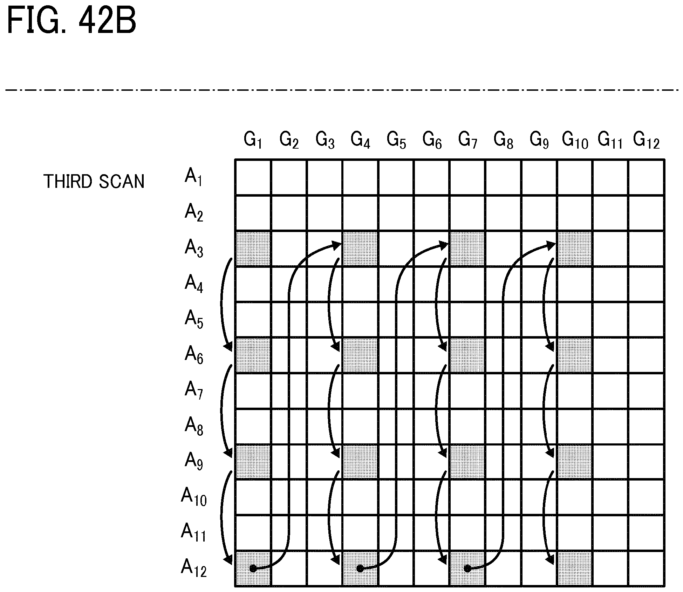

According to a detection sequence (C-2-1) as a specific example of the detection sequence (C-2) according to the present invention, the light emitting areas $A_1$, $A_4$, $A_7$, and $A_{10}$ sequentially emit light to the detection field $G_1$ in the recited order during a time period of T / 4 which is the time interval of detection between the detection field $G_1$ and the detection field $G_4$, the light emitting areas $A_1$, $A_4$, $A_7$, and $A_{10}$ sequentially emit light to the detection field $G_4$ in the recited order during the time period T / 4 between the detection field $G_4$ and the detection field $G_7$, and the light emitting areas $A_1$, $A_4$, $A_7$, and $A_{10}$ sequentially emit light to the detection field $G_7$ in the recited order during the time period T / 4 between the detection field $G_7$ and the detection field $G_{10}$ in the first scan (refer to FIG. 42). Subsequently, the light emitting areas $A_2$, $A_5$, $A_8$, and $A_{11}$ sequentially emit light to the detection field $G_1$ in the recited order during the time period T / 4 between the detection field $G_1$ and the detection field $G_4$, the light emitting areas $A_2$, $A_5$, $A_8$, and $A_{11}$ sequentially emit light to the detection field $G_4$ in the recited order during the time period T / 4 between the detection field $G_4$ and the detection field $G_7$ and the light emitting areas $A_2$, $A_5$, $A_8$, and $A_{11}$ sequentially emit light to the detection field $G_7$ in the recited order during the time period T / 4 and the detection field $G_7$ and the detection field $G_{10}$ in the second scan. Then, the light emitting areas $A_3$, $A_6$, $A_9$, and $A_{12}$ sequentially emit light to the detection field $G_1$ in the recited order during the time period T / 4 between the detection field $G_1$ and the detection field $G_4$, the light emitting areas $A_3$, $A_6$, $A_9$, and

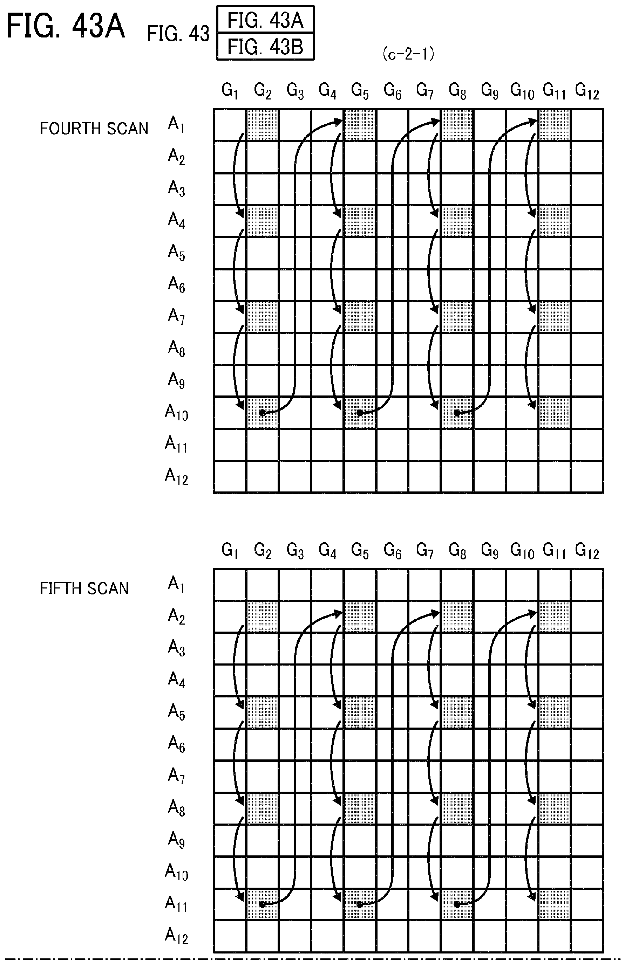

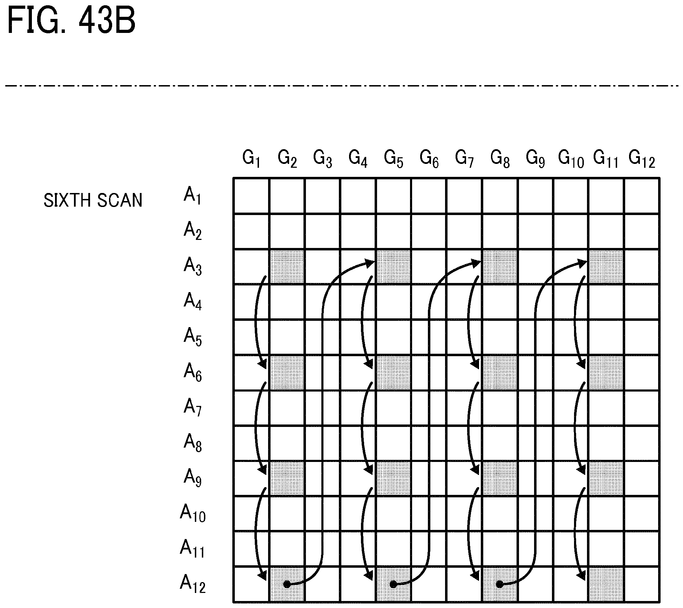

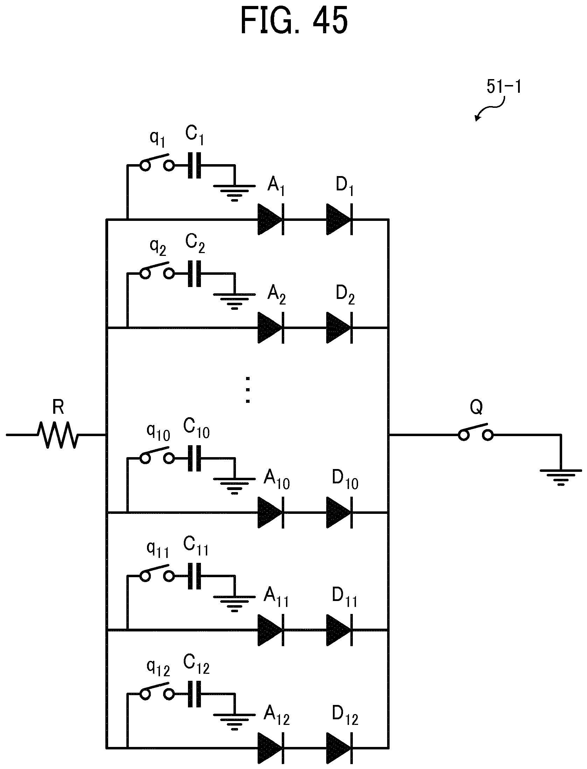

$A_{12}$ sequentially emit light to the detection field $G_4$ in the recited order during the time period $T/4$ between the detection field $G_1$ and the detection field $G_7$, and the light emitting areas $A_3$, $A_6$, $A_9$, and $A_{12}$ sequentially emit light to the detection field $G_7$ in the recited order during the time period $T/4$ between the detection field $G_7$ and the detection field $G_{10}$, in the third scan. In the fourth scan (refer to FIG. 43), the light emitting areas $A_1$, $A_4$, $A_7$, and $A_{10}$ sequentially emit light to the detection field $G_2$ in the recited order during the time period $T/4$ between the detection field $G_2$ and the detection field $G_5$, the light emitting areas $A_1$, $A_4$, $A_7$, and $A_{10}$ sequentially emit light to the detection field $G_5$ in the recited order during the time period $T/4$ between the detection field $G_5$ and the detection field $G_8$, and the light emitting areas $A_1$, $A_4$, $A_7$, and $A_{10}$ sequentially emit light to the detection field $G_8$ in the recited order during the time period $T/4$ between the detection field $G_8$ and the detection field $G_{11}$. In the sixth scan, the light emitting areas $A_3$, $A_6$, $A_9$, and $A_{12}$ sequentially emit light to the detection field $G_2$ in the recited order during the time period $T/4$ between the detection field $G_2$ and the detection field $G_5$, the light emitting areas $A_3$, $A_6$, $A_9$, and $A_{12}$ sequentially emit light to the detection field $G_5$ in the recited order during the time period $T/4$ between the detection field $G_5$ and the detection field $G_8$, and the light emitting areas $A_3$, $A_6$, $A_9$, and $A_{12}$ sequentially emit light to the detection field $G_8$ in the recited order during the time period $T/4$ between the detection field $G_1$ and the detection field $G_2$. In the seventh scan (refer to FIG. 45), the light emitting areas $A_1$, $A_4$, $A_7$, and $A_{10}$ sequentially emit light to the detection field $G_3$ in the recited order during the time period $T/4$ between the detection field $G_3$ and the detection field $G_6$, the light emitting areas $A_1$, $A_4$, $A_7$, and $A_{10}$ sequentially emit light to the detection field $G_6$ in the recited order during the time period $T/4$ between the detection field $G_6$ and the detection field $G_9$, and the light emitting areas $A_1$, $A_4$, $A_7$, and $A_{10}$ sequentially emit light to the detection field $G_9$ in the recited order during the time period $T/4$ between the detection field $G_9$ and the detection field $G_{12}$. In the eighth scan, the light emitting areas $A_2$, $A_5$, $A_8$, and $A_{11}$ sequentially emit light to the detection field $G_3$ in the recited order during the time period $T/4$ between the detection field $G_3$ and the detecting detection field $G_6$, the light emitting areas $A_2$, $A_5$, $A_8$, and $A_{11}$ sequentially emit light to the detection field $G_6$ in the recited order during the time period $T/4$ between the detection field $G_6$ and the detection field $G_9$, and the light emitting areas $A_2$, $A_5$, $A_8$, and $A_{11}$ sequentially emit light to the detection field $G_9$ in the recited order during the time period $T/4$ between the detection field $G_9$ and the detection field $G_{12}$. In the ninth scan, the light emitting areas $A_3$, $A_6$, $A_9$, and $A_{12}$ sequentially emit light to the detection field $G_3$ in the recited order during the time period $T/4$ between the detection field $G_3$ and the detection field $G_6$, the light emitting areas $A_3$, $A_6$, $A_9$, and $A_{12}$ sequentially emit light to the detection field $G_6$ in the recited order during the time period $T/4$ between the detection field $G_6$ and the

detection field $G_9$, and the light emitting areas $A_3$, $A_6$, $A_9$, and $A_{12}$ sequentially emit light to the detection field $G_9$ in the recited order during the time period $T/4$ between the detection field $G_9$ and the detection field $G_{12}$.

When a time period $T$ is a time period for scanning the range of the scanning angle $\varphi$, with the detection sequence (a-1), specifically the detection sequence (a-1-1), a detection time that is a time interval between the emission of a certain light emitting area $A$ and the emission of another light emitting area $A$ is calculated as $T/(12 \times 12)$. With the detection sequence (a-2), specifically the detection sequences (a-2-1) and (a-2-2), the detection time is calculated as $T/(12 \times 6)$. With the detection sequence (a-3), specifically the detection sequence (a-3-1), the detection time is calculated as $T/(12 \times 4)$. With the detection sequence (c-1), specifically the detection sequence (c-1-1), the detection time is calculated as $T/(4 \times 12)$. With the detection sequence (c-2), specifically the detection sequence (c-2-1), the detection time is calculated as $T/(4 \times 4)$.

The first constraint in the second example configuration is $T/(12 \times 12) > 2L_{max}/C$ in the detection sequence (a-1), specifically in the detection sequence (a-1-1), $T/(12 \times 6) > 2L_{max}/C$ in the detection sequence (a-2), specifically in the detection sequences (a-2-1) and (a-2-2), $T/(12 \times 4) > 2L_{max}/C$ in the detection sequence (a-3), specifically the detection sequence (a-3-1), $T/(4 \times 12) > 2L_{max}/C$ in the detection (c-1), specifically the detection sequence (c-1-1), and $T/(4 \times 4) > 2L_{max}/C$ in the detection sequence, specifically the detection sequence (c-2-1).

More specifically about an example design for the object detector, the first rotating mirror 24 of 2000 rpm and the light emitting areas $A_1$ through $A_{20}$ are used, the scanning angle $\varphi$ of 140° is divided by 0.25°, that is, there are detection fields $G_1$ through $G_{560}$, and an object to be detected is disposed at a position at which the maximum detection distance is 200 m. With such an object detector, according to detection sequence $(\alpha 1)$, one scan is performed in which detection fields $G_1$, $G_2$, ... $G_{559}$, and $G_{560}$ are detected in the recited order and the light emitting areas $A_1$ through $A_{20}$ emits detection light to a detection field $G_i$ during the detection time interval between $G_i$ and $G_i + 1$ ($i$ is natural numbers from 1 through 559). In such a case, the calculated detection time is 1.04 $\mu$s. According to detection sequence $(\beta_1)$, a first scan is performed in which the detection fields $G_1$, $G_5$, ...$G_{553}$, and $G_{557}$ are detected in the recited order, and then a second scan is performed in which the detection field $G_2$, $G_6$, ..., $G_{554}$, and $G_{558}$ are detected in the recited order, a third scan is performed in which the detection fields $G_3$, $G_7$, ..., $G_{555}$, and $G_{559}$ are detected in the recited order, and a fourth scan is performed in which the detection fields $G_4$, $G_8$, ..., $G_{556}$, and $G_{560}$ are detected in the recited order. Further, in the detection sequence $(\beta_1)$, the light emitting areas $A_1$ through $A_{20}$ emits light to a detection field $G_i$ during the detection time interval between $G_i$ to $G_{i+4}$ ($i$ is natural numbers from 1 through 559). In such a case, the calculated detection time is 4.17 $\mu$s. In consideration of constrain time of 1.33$\mu$s, obtaining the distance information of all of the detection fields $G_1$ through $G_{560}$ is impossible according to the detection sequence ($\alpha_1$).

<First Example Configuration of Light Source>

FIG. 45 is a circuit diagram of a light-source drive circuit 51-1 according to the first example configuration of the light-source drive circuit 51. The light-source drive circuit 51 selectively drives the plurality of light emitting areas A (surface emitting laser array) of the light source 21. As illustrated in FIG. 45, the light-source drive circuit 51-1 includes twelve light emitting areas $A_1$ through $A_{12}$ of the light source 21, twelve capacitors $C_1$ through $C_{12}$ as capacitive elements corresponding to the light emitting areas $A_1$ through $A_{12}$, respectively, a resistor R, switching elements $q_1$ through $q_{12}$ as metal oxide semiconductor field-effect transistors (MOSFET in the present embodiment) corresponding to the capacitors $C_1$ through $C_{12}$, respectively, and another switching element Q (MOSFET in the present embodiment) that is common to all of the light emitting areas $A_1$ through $A_{12}$. In the present embodiment, the light-source drive circuit 51-5 further includes diodes Di through $D_{12}$ to prevent a backward current of the light emitting areas $A_1$ through $A_{12}$. Hereinafter, the switching elements $q_1$ through $q_{12}$ and the capacitors $C_1$ through $C_{12}$ are collectively be referred to as the switching element q and the capacitor C, respectively.

The switching elements $q_1$ through $q_{12}$ serve as charging switches to charge the corresponding capacitors $C_1$ through $C_{12}$, and each gate of the switching elements $q_1$ through $q_{12}$ is connected to a switching controller SC1 to control switching time of each gate. The switching controller SC1 generates a pulse signal (binarized signal) as a control signal and inputs the pulse signal to the gate of the switching element q so as to control the switching time that is a time when the switch is turned on.

The switching element q and the capacitor C corresponding to each light emitting area A constitute charging units to charge the light emitting areas A. All of the charging units constitute the charging circuit.

The switching element Q serves as an electric-charge supply switch to supply the electric charge charged in each capacitor C to the light emitting areas A and has a gate connected to a switching controller SC2. The switching controller SC2 generates a pulse signal (binarized signal) as a control signal and inputs the pulse signal to the gate of the switching element q so as to control the switching time that is a time when the switch is turned on.

Next, the operation of the light-source drive circuit 51-1 is described. When the switching element $q_1$ is turned on, the capacitor $C_1$ is charged. When the switching element Q is turned on with the switching element $q_1$ maintained to be on, the electric charge of the capacitor $C_1$ is supplied to the light emitting area $A_1$ so that the light emitting area $A_1$ emits pulsed light. After pulsed light is emitted from the light emitting area $A_1$, the switching element $q_1$ and the switching element Q are turned off.

When the switching element $q_2$ is turned on, the capacitor $C_2$ is charged. When the switching element Q is turned on with the switching element $q_2$ maintained to be on, the electric charge of the capacitor $C_2$ is supplied to the light emitting area $A_2$ so that the light emitting area $A_2$ emits pulsed light. After pulsed light is emitted from the light emitting area $A_2$, the switching element $q_2$ and the switching element Q are turned off.

According to an example not forming part of the invention, sequentially performing the same operation (a series of processes) allows the light emitting areas $A_1$ through $A_{12}$ to sequentially emit light.

To perform such a series of processes, the switching controller SC1 applies a first pulse signal to the switching element q, and then the switching controller SC2 applies a second pulse signal to the switching element Q while the pulsed signal 1 is maintained to be at high level. In this case, the second pulse signal has a shorter pulse width than that of the first pulse signal and rises at substantially the same timing as the first pulse signal does.

In addition, the main controller 40 synchronously outputs a light-emission control signal to the switching controllers SC1 and SC2 to cause each light emitting area A to emit light in distance measurement. The switching controller SC 1 generates a pulse signal (binarized signal) as a control signal and inputs the pulse signal to the gate of the switching element q so as to control the switching time that is a time when the switch is turned on. The switching controller SC2 generates the second pulse signal in response to the light-emission control signal from the main controller 40 and applies the second pulse signal to the switching element Q.

Note that the light emitting areas A emit light for an extremely short time ranging from several nanosecond (ns) through several tens of ns when the switching element Q is turned on, and the time period for charging the capacitor C significantly relies on time constant that is R $\times$ C.

When a typical high-power source that has a high voltage source $HV_{in}$ of several tens of volts (V) is used, the resistor R is preferably set to a resistance of several hundreds of ohms ($\Omega$) to prevent an increase in power consumption that is imposed on the resistor R and a breakage of the resistor R due to such an increase in power consumption. For this reason, even with the capacitor C having a capacitance of 1000 picofarad (pF), time constant is made longer, ranging from several tens of ns through several hundreds of ns.

Setting charging time $\tau$ that is ten times as long as the time constant is sufficient such that when the resistance of the resistor R is 300 $\Omega$ and the capacitance of the capacitor C is 1000 pF, the charging time $\tau$ is 3 $\mu$s.

As a matter of course, the timing of turning on the switching element q in a shorter interval between the switching element q1 and the switching element q1 + 1 (i is a natural number of from 1 through 11) than the charging interval $\tau$ of 3 $\mu$s.

According to the first example configuration of the light source 21, the following second constraints are satisfied: T / 12 > $\tau$ in the detection sequence a and T / 6 > $\tau$ in the detection sequence b, T / 4 > $\tau$ in the detection sequence c, and T / 2 > $\tau$ in the detection sequence d.

According to the second example configuration of the light source 21, the following second constraints are satisfied: T / (12 × 12) > $\tau$ in the detection sequence (a-1), specifically (a-1-1); T / (12 × 6) > $\tau$ in the detection sequence (a-2), specifically (a-2-1) and (a-2-2); T / (12 × 4) > $\tau$ in the detection sequence (c-1), specifically (c-1-1); and T / (4 × 4) > $\tau$ in the detection sequence (c-2), specifically (c-2-1).

<Second Example Configuration of Light Source>

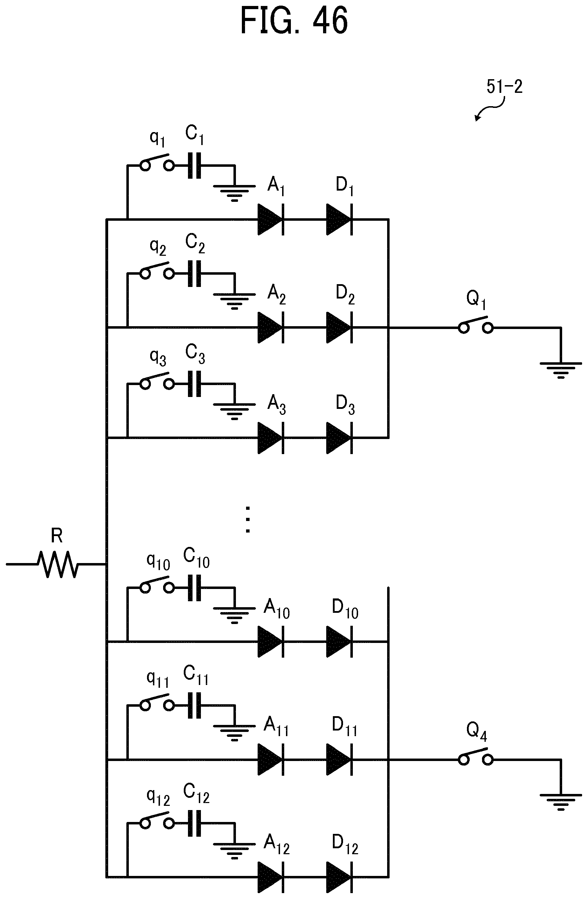

FIG. 46 is a circuit diagram of a light-source drive circuit 51-2 according to the second example configuration of the light-source drive circuit 51. The light-source drive circuit 51 selectively drives the plurality of light emitting areas A (surface emitting laser array) of the light source 21. FIG. 46 differs from FIG. 45 in that a plurality of switching elements Q (for example, four switching elements $Q_1$ through $Q_4$) are disposed, each switching element Q is common to a part (for example, three) of the light emitting areas A in FIG. 46. Hereinafter, four switching elements Q are referred to as the switching elements $Q_1$ through $Q_4$ when distinguished from each other.

More specifically, the light emitting areas $A_1$, $A_2$, and $A_3$ are connected to the switching element Qi, and the light emitting areas $A_4$, $A_5$, and $A_6$ are connected to the switching element $Q_2$. The light emitting areas $A_7$, $A_8$, and $A_9$ are connected to the switching element $Q_3$, and the light emitting areas $A_{10}$, $A_{11}$, and $A_{12}$ are connected to the switching element Q4.

When the switching elements $q_1$, $q_4$, $q_7$, and $q_{10}$ are turned on, the capacitors $C_1$, $C_4$, $C_7$, and $C_{10}$ are charged. When the switching element $Q_1$ is turned on with the switching elements $q_1$, $q_4$, $q_7$, and $q_{10}$ maintained to be on, the electric charge of the capacitor $C_1$ is supplied to the light emitting area $A_1$ so that the light emitting area $A_1$ emits pulsed light. After pulsed light is emitted from the light emitting area $A_1$, the switching element $q_1$ and the switching element $Q_1$ are turned off.

Subsequently, when the switching element $Q_2$ is turned on, the electric charge of the capacitor $C_4$ is supplied to the light emitting area $A_4$ so that the light emitting area $A_4$ emits pulsed light. After pulsed light is emitted from the light emitting area $A_4$, the switching element $q_4$ and the switching element $Q_2$ are turned off.

Subsequently, when the switching element $Q_3$ is turned on, the electric charge of the capacitor $C_7$ is supplied to the light emitting area $A_7$ so that the light emitting area $A_7$ emits pulsed light. After pulsed light is emitted from the light emitting area $A_7$, the switching element $q_7$ and the switching element $Q_3$ are turned off.

Subsequently, when the switching element $Q_4$ is turned on, the electric charge of the capacitor $C_{10}$ is supplied to the light emitting area $A_{10}$ so that the light emitting area $A_{10}$ emits pulsed light. After pulsed light is emitted from the light emitting area $A_{10}$, the switching element $q_{10}$ and the switching element $Q_4$ are turned off.

Note that the switching element $q_2$ for charging the capacitor $C_2$ is turned on to charge the capacitor $C_2$ while the light emitting areas $A_4$, $A_7$, and $A_{10}$ emit light. This is because the switching circuit (a circuit with the switching element $Q_1$ to open and close) of the light emitting area $A_2$ is independent of the switching circuit (the circuits respectively provided with the switching elements $Q_2$ through $Q_4$ to open and close) of the light emitting areas $A_4$ through $A_{12}$. Accordingly, the cycle of charging the capacitor C, such as the set of $C_1$, $C_2$, and $C_3$, the set of $C_4$, $C_5$, and $C_6$, the set of $C_7$, $C_8$, and $C_9$, or the set of $C_{10}$, $C_{11}$, and $C_{12}$, is to be considered for the charging time.

When the above-described charging time (the cycle of charging) for the second example configuration of the light-source drive circuit 51-2 is compared to the cycle of charging (the set of $C_1$, $C_2$, $C_3$, ..., $C_{11}$, and $C_{12}$.) in the first example configuration of the light-source drive circuit 51-1 that includes only one switching element Q, the charging time in the second example configuration appears to be a quarter of the charging time in the first example configuration.

According to the first example configuration of the light source 21, the following second constraints that are loosened by the number of switching elements Q are satisfied: T / 12 > $\tau$ / 4 in the detection sequence a, T / 6 > $\tau$ / 4 in the detection sequence b, T / 4 > $\tau$ / 4 in the detection sequence c, and T / 2 > $\tau$ / 4 in the detection sequence d.

According to the second example configuration of the light source 21 as well, the following second constraints that are loosened by the number of switching elements Q are satisfied: T / (12 × 12) > $\tau$ / 4 in the detection sequence (a-1), T / (12 × 6) > $\tau$ / 4 in the detection sequence (a-2), T / (12 × 4) > $\tau$ / 4 in the detection sequence (a-3), T / (4 × 12) > $\tau$ / 4 in the detection sequence (c-1), and T / (4 × 4) > $\tau$ / 4 in the detection sequence (c-2).

<With A Plurality of Light Detectors>

In the cases described above, the light detection system includes a single light detector 29.

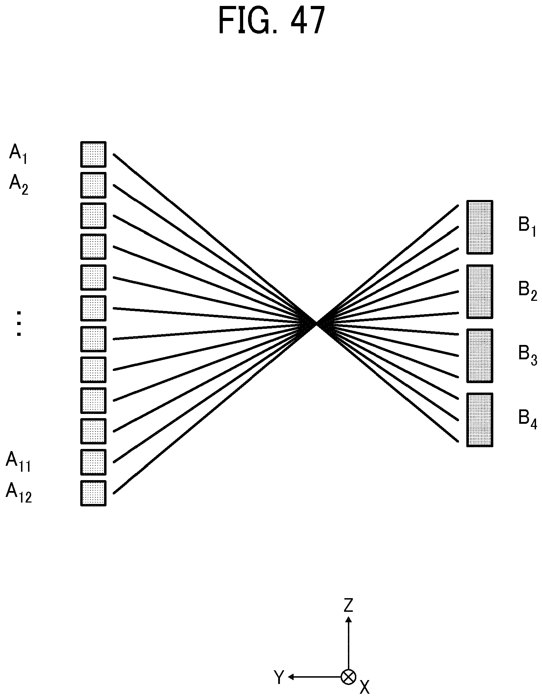

FIG. 47 is an illustration of four light detectors 29 $B_1$ through $B_4$ relative to the light source 21 including twelve light emitting areas A. The four light detectors 29 are given with the reference numerals $B_1$ through $B_4$ when distinguished from each other. In the present embodiment, the arrangement of the light detectors $B_1$ through $B_4$ is not limited to the configuration in which the light detectors $B_1$ through $B_4$ are arranged along the Z-axis direction. In other words, it is desired that the plurality of the light detectors $B_1$ through $B_4$ are spaced apart at least along the Z-axis direction.

In the present embodiment, the light detector $B_4$ receives light emitted from the light emitting areas $A_1$ through $A_3$. The light detector $B_3$ receives light emitted from the light emitting areas $A_4$ through $A_6$. The light detector $B_2$ receives light emitted from the light emitting areas $A_7$ through $A_9$. The light detector $B_1$ receives light emitted from the light emitting areas $A_{10}$ through $A_{12}$.

In such cases, the detection light beams emitted from the light emitting areas $A_1$, $A_4$, $A_7$, and $A_{10}$ are directed to the different light detectors, respectively. This allows the light emitting areas $A_1$, $A_4$, $A_7$, and $A_{10}$ to emit lights at the same time. The same applies to the light emitting areas $A_2$, $A_5$, $A_8$, and $A_{11}$ and the light emitting areas $A_3$, $A_6$, $A_9$, and $A_{12}$. Accordingly, the cycle of the light emitting area A to emit light, such as the set of $A_1$, $A_2$, and $A_3$, the set of $A_4$, $A_5$, and $A_6$, or the set of $A_7$, $A_8$, and $A_9$, is to be considered for the round-trip time of light.

When the above-described cycle of the light emitting area A regarding the round-trip time of light for the configuration with a plurality of light detector 29 is compared to the cycle of the light emitting area A (the set of $A_1$, $A_2$, $A_3$, ..., An, and $A_{12}$.) regarding the round-trip time of light in the configuration with one light detector 29, the round-trip time of light in the configuration with a plurality of light detectors 29 appears to be a quarter of the round-trip time in the configuration with one light detector 29.

That is, according to the second example configuration of the light source 21, the following first constraints that are loosened by the number of light detectors 29 are satisfied: $T / (12 \times 12) > 1 / 4 \times 2L_{max} / c$ in the detection sequence (a-1), $T / (12 \times 6) > 1 / 4 \times 2L_{max} / c$ in the detection sequence (a-2), $T / (12 \times 4) > 1 / 4 \times 2L_{max} / c$ in the detection sequence (a-3), $T / (4 \times 12) > 1 / 4 \times 2L_{max} / c$ in the detection sequence (c-1), and $T / (4 \times 4) > 1 / 4 \times 2L_{max} / c$ in the detection sequence (c-2).

<Order of Emitting Light of Light Emitting Areas>

With a reduction in m that is the number of detection fields G to be detected to obtain distance information within time period T and in n that is the number of light emitting areas A to emit light to obtain the distance information within time period $T / m$, the detection time period $T / (m \times n)$ increases. Such a configuration reduces thermal crosstalk and electrical crosstalk such that a certain light emitting area A has an adverse effect on another light emitting area A.

However, there are light emitting methods for the light emitting areas A that are suitable to handle the thermal crosstalk and electrical crosstalk in any cases.

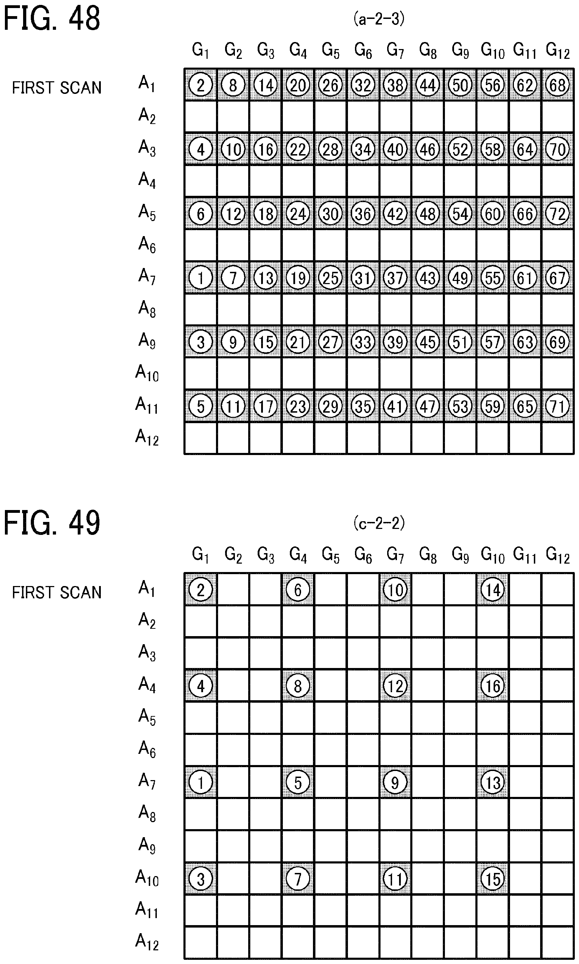

To allow all of the light emitting areas A to emit light to each detection field G in two scans according to the detection sequence (a-2), the detection sequence (a-2-3) in which the light emitting areas $A_1$, $A_3$, $A_5$, $A_7$, $A_9$, and $A_{11}$ sequentially emit light in the recited order as illustrated in FIG. 48 is according to the invention more suitable than the detection sequence (a-2-2) in which the light emitting areas $A_1$, $A_3$, $A_5$, $A_7$, $A_9$, and $A_{11}$ (every other light emitting area A) sequentially emit light in the recited order as illustrated in FIG. 39. In FIG. 48, in arrangements not within the scope of the claims, the light emitting areas A sequentially emit light to each detection field G such that the interval of the light emitting areas A to emit light alternates between five light emitting areas A and seven light emitting areas A. Note that the numbers indicated in the light emitting areas A refer to the order of emitting light in FIG. 48.

To allow all of the light emitting areas A to emit light to each detection field G in nine scans according to the detection sequence (c-2), in accordance with the present invention, the detection sequence (c-2-2) in which the light emitting areas $A_7$, $A_1$, $A_{10}$, and $A_4$ sequentially emit light in the recited order as illustrated in FIG. 49 is more suitable than the detection sequence (a-2-1) in which the light emitting areas $A_1$, $A_4$, $A_7$, and $A_{10}$ sequentially emit light in the recited order at intervals of two light emitting areas A as illustrated in FIG. 42. In FIG. 49, the light emitting areas A sequentially emit light to each detection field G such that the interval of the light emitting areas A to emit light alternates between five light emitting areas A and eight light emitting areas A. Note that the numbers indicated in the light emitting areas A refer to the order of emitting light in FIG. 49.

In other words, the light emitting areas A are divided into a upper group and a lower group when n is even. The order of emitting light is determined such that the light emitting areas A of the same group do not sequentially emit light.

Further, when the light emitting area A that belongs to the upper group and is closest to the lower group or that belongs to the lower group and is closest to the upper group first emits light, a wider interval is obtained between a light emitting area A that emits light at a certain timing and another light emitting area A that subsequently emits light.

The same applies to cases in which n is an odd number. In other words, the light emitting areas A are divided into a upper group and a lower group with respect to the center of the light emitting areas A. The order of emitting light is determined such that the light emitting areas A of the same group do not sequentially emit light. In such cases, the light emitting area A that first emits light is preferably the light emitting area A at the center.

As illustrated in FIG. 2, when there is an object ahead of the vehicle 1, the main controller 40 determines whether or not the object has moved based on the object information stored in the memory 50, at prescribed time intervals, and obtains the movement information of the object such as the moving direction and moving speed of the object when it is determined that the object has moved. Then, the main controller 40 displays the object information and the movement information on the display 30.

When the main controller 40 determines that there is a danger, the main controller 40 outputs alarm information to the voice and alarm generator 60.

As illustrated in FIG. 41, the voice and alarm generator 60 includes, for example, a voice synthesizer 61, an alarm signal generator 62, and a loudspeaker 63.

The voice synthesizer 61 has a plurality of pieces of voice data, and when the alarm information is received from the main controller 40, the voice synthesizer 61 selects the corresponding piece of voice data and outputs the selected piece of voice data to the loudspeaker 63.

When the alarm information is received from the main controller 40, the alarm signal generator 62 generates the corresponding alarm signal and outputs the selected alarm signal to the loudspeaker 63.

As described above, the controller and processor of the object detector according to an embodiment of the present invention are configured by the object information acquisition unit 203 according to the present the present embodiment. For example, the controller or the processor may be implemented by one or more processing circuits or circuitry, such as a programmed processor, an application specific integrated circuit (ASIC), etc. The monitoring controller 300 of the sensing apparatus according to an embodiment of the present invention is configured by the main controller 40, the memory 50, and the voice and alarm generator 60.

As described above, the laser radar 20 according to a first example of the present embodiment includes, for example, the light emission system 201, the light detection system 202, and the object information acquisition unit 203.

The light emission system 201 includes, for example, a light source 21, a coupling lens 22, a first reflecting mirror 23, and a first rotating mirror 24. The light detection system 202 includes, for example, a second rotating mirror 26, a second reflecting mirror 27, an imaging lens 28, and a light detector 29.

The light source 21 includes a plurality of light emitting areas that are arranged in the Z-axis direction at regular intervals. Further, each of the light emitting areas A includes a plurality of two-dimensionally arranged light-emitting units LM. In such cases, the light intensity of the detection light emitted from the light emission system 201 and thereby the detectable distance of an object can be extended.

The object information acquisition unit 203 calculates the distance to the object for each of the detection fields that are divided in the vertical direction (the Z-axis direction), based on the timing of light emission at the light source 21 and the timing of light reception at the light detector 29. Further, the object information acquisition unit 203 acquires object information based on the calculated distance to the object for each of the detection fields that are divided in the vertical direction (the Z-axis direction). According to the present example embodiment, object information is accurately acquired.

With the monitoring apparatus 10 according to the present embodiment, the provision of the laser radar 20 enables accurate acquisition of the object information and movement information.

Further, the laser radar 20 as the object detector according to the second example configuration of the invention includes the optical scanning system (light emission system 201) and the light-receiving system (light detection system 202). The optical scanning system includes the light source 21 including N ($N \geq 2$) light emitting areas A spaced apart along the Z-axis direction to scan a scanning range with light, which is emitted from the light source 21, in the Y-axis direction that is different (non-parallel to the Z-axis direction) from the Z-axis direction. The light-receiving system (light detection system 202) includes k ($k \geq 1$) light-receiving unit (light detector 29) to receive light emitted from the optical scanning system and reflected from the object. In the laser radar 20 as the object detector, the conditional expression: $T / (m \times n) > 2L_{max} / (c \times k)$ is satisfied, when the scanning range to be scanned by the optical scanning system is divided into M ($M \geq 2$) fields, m ($m \geq 1$) out of M fields is detected by one scan of the optical scanning system within time period T that is taken for scanning the whole scanning range by one scan, n ($n \geq 1$) out of N light emitting areas A sequentially emit light to m fields at intervals of time $T / (m \times n)$ within $T / m$, $L_{max}$ is a maximum detection distance of an object, and c is the speed of light.

Such a configuration prevents light beams emitted from two light emitting areas A one after another from being received by the light-receiving system at the same time and also prevents the deviation of the detection distance from the actual distance to an object.

As a result, the distance to an object is obtained more accurately.

The light-source drive circuit 51 according to the second example of the present embodiment includes N light emitting areas A, N capacitors (capacitive element) corresponding to the N light emitting areas A to supply electric charge to the N light emitting areas A, and j ($j \geq 1$) switching elements Q. When the conditional expression: $T / (m \times n) > \tau/j$ is satisfied where $\tau$ is a charging time of the capacitor C, the dummy charging time of the capacitor C is shortened and the light-emitting time interval $T / (m \times n)$ between the two light emitting areas A that emit light one after another is also shortened.

As a result, more pieces of detection distance information can be obtained for a short time.

Further, the laser radar 20 as the object detector according to the third example of the present embodiment includes the light-source drive circuit that dries the light source 21, the optical scanning system (light emission system 201) and the light-receiving system (light detection system 202). The optical scanning system includes the light source 21 including N (N ≥ 2) light emitting areas A spaced apart along the Z-axis direction to scan a scanning rage with light, which is emitted from the light source 21, in the Y-axis direction that is different (non-parallel to the Z-axis direction) from the Z-axis direction. The light-receiving system (light detector 29) includes k (k ≥ 1) light-receiving unit (light detection system 202) to receive light emitted from the optical scanning system to an object and reflected from the object. In the laser radar 20 as the object detector, the conditional expression: T / (m × n) > τ/j is satisfied, when the scanning range to be scanned by the optical scanning system is divided into M (M ≥ 2) fields, m (m ≥ 1) out of M fields is detected by one scan of the optical scanning system within time T that is taken for scanning the whole scanning range by one scan, n (n ≥ 1) out of N light emitting areas A sequentially emit light to m fields at intervals of time T / (m × n) within T / m, and the light-source drive circuit 51 includes N light emitting areas A that correspond to N capacitors C and j (j ≥ 1) switching elements Q that correspond to at least a part of the N light emitting areas A, and τ is a charging time of the capacitors Q.

In such cases, the electric charge is supplied to the light emitting areas A with the capacitors C sufficiently charged to supply the electric charge to the light emitting areas A. Accordingly, a sufficient degree of light-emitting power is stably obtained.

As a result, the distance to an object is obtained more accurately.

Note that the laser radar 20 according to the present embodiment preferably includes any one of the configurations according to the second example and the third example.

In the configuration according to the third example of the present embodiment, when according to the invention the conditional expression: T / (m × n) > $2L_{max}$ / (c × k) is satisfied where $L_{max}$ is a maximum detection distance of an object and c is the speed of light, the light beams emitted from two light emitting areas A one after another are prevented from being received by the light-receiving system at the same time and also the detection distance is prevented from deviating from the actual distance to an object.

Further, when j is a submultiple of n, the algorithm is prevented from becoming complex.

When k is greater than or equal to 2 (k ≥ 2) and k light-receiving units (29) are spaced apart at least along the Z-axis direction, T / (m × n) that is a time interval of light emitting is shortened and more pieces of detection distance information can be obtained for a short time.

When n is a submultiple of N and m is according to the invention a submultiple of M, the algorithm is prevented from becoming complex.

Further, when k is a submultiple of n, the algorithm is prevented from becoming complex.

The optical scanning system further includes a first rotating mirror 24 (deflector) to deflect the light emitted from the light source 21. The first rotating mirror 24 is a polygon mirror with a rotation axis (RA) that is substantially parallel to the Z-axis direction. When ω is an angular speed at which the polygon mirror rotates at a constant speed and φ is a scanning angle that corresponds to the scanning range, T = φ / ω is satisfied.

According to the invention, sequence numbers 1 through 2p are given to n light emitting areas A that ranges from one end (a first light emitting area $A_1$ in one end, e.g., in + Z side) through the other end (a 2p-th light emitting area A in the other end, e.g., in - Z side) along the Z-axis direction where n is expressed by 2P (p is natural number). In such a case, when the n light emitting areas A sequentially emits light to each of the m detection fields (G) in the time period of T / m, one of the first light emitting area $A_1$ through a p-th light emitting area $A_p$ and another light emitting area A that is not adjacent to the one of the first light emitting area $A_1$ through a p-th light emitting area $A_p$ and that is one of a (p + 1)th light emitting area $A_{p+1}$ through the 2p-th light emitting area $A_{2p}$ sequentially emit light. Such a configuration prevents or eliminates thermal interference between the light emitting areas A.

When the p-th light emitting area $A_p$ or the (p + 1)th light emitting area $A_{p+1}$ first emits light, the n light emitting areas A may sequentially emit light so as to further prevent or eliminate the thermal interference between the light emitting areas A.

When the p-th light emitting area $A_p$ first emits light, the n light emitting areas A sequentially emit light such that distance between two light emitting areas (the one of the first light emitting area $A_1$ through a p-th light emitting area $A_p$ and the one of the (p + 1)th light emitting area $A_{p+1}$ through the 2p-th light emitting area $A_{2p}$) that emit light one after another is greater than or equal to the distance between the p-th light emitting area $A_p$ and the (p + 1)th light emitting area $A_{p+1}$. When the (p + 1)th light emitting area $A_{p+1}$ first emits light, the n light emitting areas A sequentially emit light such that the distance between the two light emitting areas that emit light one after another is greater than or equal to the distance between the first light emitting area $A_1$ and the (p + 1)th light emitting area $A_{p+1}$. Such a configuration prevents or eliminates the thermal interference between the light emitting areas A as much as possible.

Further, sequence numbers 1 through 2p+1 are given to n light emitting areas A ranging from one end (a first light emitting area $A_1$ in one end, e.g., in + Z side) through the other end (a (2p + 1)th light emitting area $A_{2p+1}$ in the other end, e.g., - Z side) along the Z-axis direction where n is expressed by 2p+1 (p is natural number). In such a case, when the n light emitting areas A sequentially emits light to each of the m detection fields G in T / m, one of the first light emitting area $A_1$ through the p-th light emitting area $A_p$ and one of a (p + 2)th light emitting area $A_{p+2}$ through the (2p + 1)th light emitting area $A_{2p+1}$ sequentially emit light. Such a configuration prevents or eliminates thermal interference between the light emitting areas A.

When the (p + 1)th light emitting area $_{p+1}$ first emits light, n light emitting areas may sequentially emit light so as to further prevent or eliminate the thermal interference between the light emitting areas A.

When the n light emitting areas A sequentially emit light such that the distance between two light emitting areas (the one of the first light emitting area $A_1$ through the p-th light emitting area $A_p$ and the one of a (p + 2)th light emitting area $A_{p+2}$ through the (2p + 1)th light emitting area $A_{2p+1}$) that sequentially emit light is greater than or equal to the distance between the (p + 1)the light emitting area $A_{p+1}$ and the (2p + 1)the light emitting area $A_{2p+1}$, thermal interference between the light emitting areas A is prevented or eliminated as much as possible.

When each light emitting area A includes a plurality of light-emitting units LM, a sufficient amount of light is output from each light emitting area A in light emission.

When the light-receiving system 202 further includes a processing unit to calculate distance information to an object based on a timing of light emission of the light source 21 and a timing of light reception at the light receiving unit when receiving light reflected from the object, the distance information to an object can be immediately and accurately obtained.

The processing unit rapidly and accurately obtains a shape of the object based on the distance to the object for each light emitting direction of light emitted from the optical scanning system.

The sensor 10 according to the embodiments of the present disclosure includes the laser radar 20 and the monitoring controller 300 that obtains the movement data including at least one of movement or non-movement of an object, moving direction, and moving speed. The sensor 10 according to the embodiments of the present disclosure quickly and accurately acquires the movement data of the object.

The sensor 10, which further includes a display device to display at least one of the position data and the movement data of an object, accurately displays at least one of the position data and the movement data of an object in real time.

The sensor 10 is mounted on the movable body 1. When judging the presence of danger based on at least one of the position data and the movement data of the object, the monitoring controller 300 outputs alarm data, thereby urging an operator of the movable body 1 to take precautions.

Further, a movable device 600 including the sensor 10 and the movable body 400 including the sensor 10 has excellent safety against impact.

In the embodiments described above, cases in which the light emission system 201 is disposed on the +Z side of the light detection system 202 are described. However, no limitation is indicated thereby.

In the embodiments described above, cases in which the light emitting areas are square-shaped are described. However, no limitation is indicated thereby.

In the embodiments described above, cases in which the light-emitting units LM are square-shaped are described. However, no limitation is indicated thereby.

In the embodiments described above, cases in which each of the first rotating mirror 24 and the second rotating mirror 26 has four specular surfaces are described. However, no limitation is indicated thereby.

In the embodiments described above, a rotation mechanism that rotates the laser radar 20 about the Z axis may further be provided.

In the embodiments described above, the relative positions of the coupling lens 22 and the imaging lens 28 are not limited to the first example arrangement and the second example arrangement.

In the embodiments described above, the example configuration of the light source 21 is not limited to the above-described example configurations.

For example, the arrangement of the plurality of light emitting areas A is not limited to the configuration in which the plurality of light emitting areas A are arranged in the Z-axis direction. In other words, it is desired that the plurality of light emitting areas A are spaced apart along at least one direction. For example, the plurality of light emitting areas A may be arranged along a direction that is not parallel to the Z-axis direction. Alternatively, in some embodiments, the plurality of light emitting areas A may be arranged in zigzag manner.

In the above-described embodiment, cases in which the light source 21 includes twelve light-emitting units LM were described. However, no limitation is indicated therein. The number of the light emitting areas may be determined according to the desired dimension of the detection field in the Z-axis direction. In some embodiment, each light emitting area A may be constructed of a single light-emitting unit LM. Further, in some embodiments, each light-emitting unit LM may be any laser other than a laser diodes (LDs) or semiconductor.

In the embodiments described above, cases in which a hundred light-emitting units LM are arranged in the Y-axis direction and a hundred light-emitting units LM are arranged in the Z-axis direction in each of the light emitting areas are described. However, no limitation is indicated thereby.

In the embodiments described above, cases in which the number of the light-emitting units LM in the Y-axis direction is equal to the number of the light-emitting units LM in the Z-axis direction in each of the light emitting areas are described. However, no limitation is indicated thereby.

In the embodiments described above, cases in which a plurality of light-emitting units LM are two-dimensionally arranged in each of the light emitting areas are described. However, no limitation is intended and a plurality of light-emitting units LM may be unidimensionally arranged within YX plane.

In the embodiments described above, cases in which d2, d3, and d4 are about 0.02 mm, 0.7 micrometer

($\mu$m), and 1 $\mu$m, respectively, are described. However, no limitation is indicated thereby.

In the above-described embodiments, the order in which a plurality of light emitting areas A emit light to each detection field G is set. Alternatively, in some embodiments, the order in which a plurality of detection fields G are detected by each light emitting area A may be set. More specifically, FIGS. 37, 38, 39, 40, 41, and 42 through 44 illustrating the above-described detection sequences (a-1-1), (a-2-1), (a-2-2), (a-3-1), (c-1-1), and (c-2-1), respectively are turned 90 degrees with the vertical axis and the lateral axis exchanged with each other. According to such modified figures, a plurality of detection fields G may be detected by each light emitting area A in set order.

Note that the order in which the light emitting areas A emit light or the detection fields G are detected is not limited to the above description, and may be modified as appropriate according to the number and arrangement of the light emitting areas A and according to the claims. In any case, the order that is set for detection (detection sequence) preferably prevents thermal interference between the light emitting areas A.

In the embodiments described above, the focal length f1 of the coupling lens 22 may be equal to the focal length f2 of the imaging lens 28. In such cases, the coupling lens 22 and the imaging lens 28 may be used in common, and the cost can be reduced.

In the embodiments described above, the main controller 40 may perform some of the processes of the object information acquisition unit 203, and the object information acquisition unit 203 may perform some of the processes of the main controller 40.

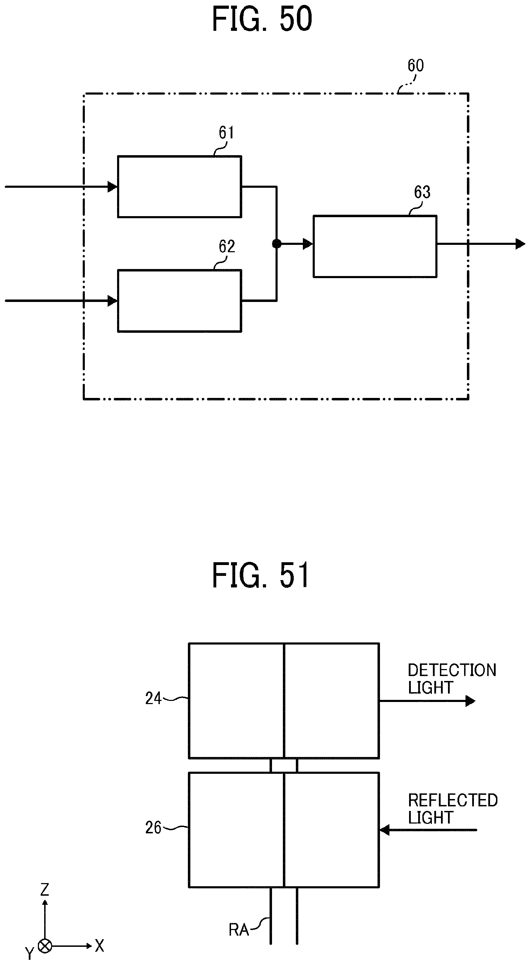

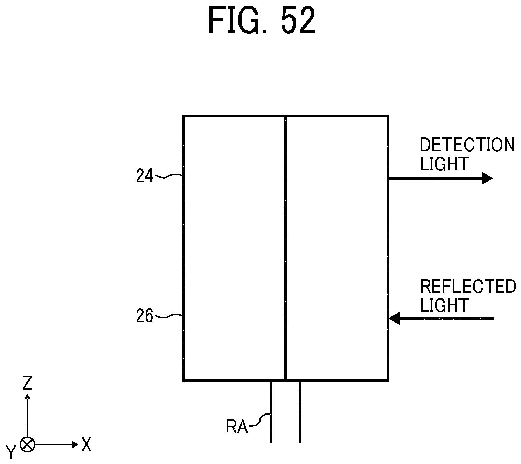

In the embodiments described above, the first rotating mirror 24 and the second rotating mirror 26 may be integrated with each other as illustrated in FIG. 51 and FIG. 52.

In the embodiments described above, cases in which the monitoring apparatus 10 includes a single laser radar 20 were described. However, no limitation is indicated thereby. For example, the monitoring apparatus 10 may include a plurality of laser radars 20 according to the size of a vehicle or the monitoring area.

In the example embodiments described above, cases in which the laser radar 20 is provided for the monitoring apparatus 10 that monitors the view in the traveling direction of the vehicle were described. However, no limitation is indicated thereby. For example, the laser radar 20 may be provided for an apparatus that monitors the rear view or side view of the vehicle.

The laser radar 20 may be provided for any device or apparatus other than vehicles to serve as a sensing apparatus. In such cases, the main controller 40 outputs alarm information that meets the purposes of the sensing.

The laser radar 20 may be used only for detecting the presence or absence of an object.

In particular, the laser radar 20 may be used, for example, for rangefinders or shape measuring apparatuses that are different from sensing apparatuses.

Examples of the movable body which the laser radar 20 is mounted on include air planes and vessels other than vehicles, such as cars, motorbikes, and trains.

Further, the concrete numerical values, shapes, and the like are just examples.

Hereinafter, a description is provided of process of thinking, in which the inventor has conceived of the embodiments described above.

In recent years, object detectors that detect the presence of an objector the distance to the object are being developed.

For example, JP-2010-096574-A discloses a laser radar including a projection unit to emit a laser beam, a scanner to two-dimensionally scan a scanning range with the laser beam emitted from the projection unit, a controller to issue an order to the projection unit to emit the laser beam and control scanning of the scanner, a selecting unit to select a reflected laser beam that is scanned with by the scanner and is reflected from a measurement target in beam that is scanned with by the scanner and is reflected from a measurement target in response to the order from the controller, a light-receiving unit to receive the reflected laser beam selected by the selecting unit, and a distance calculator to obtain distance information of the measurement target according to the timing of emitting the laser beam, which is given by the controller, and the timing of receiving the reflected laser beam, which is given by the light-receiving unit.

Further, JP-3446466-B (JP-H09(1997)-274076-A) discloses a reflection measurement apparatus including a polygon mirror, a light source, a pulsed light incidence unit, a light-receiving unit. The polygon mirror has plural reflection planes along the periphery, each reflection plane having a different angle of tilt relative to the rotation axis. The light source emits pulsed light. The pulsed light incidence unit allows the pulsed light to enter the polygon mirror from a predetermined direction. The light-receiving unit receives the pulsed light that is emitted from the reflection planes toward a measurement area ahead and is reflected from an object within the measurement area.

In the object detector as disclosed in JP-5096008-B (JP-2007-214564-A), a projection unit including a plurality of light emitting areas along the Z-axis direction is preferably used to obtain distance information of an object that is present ahead in the vertical direction (the Z-axis direction) relative to the detection range.

However, through diligent studies, the inventors have found that using such a projection unit fails to obtain accurate distance information without appropriately setting the timing of emitting light from each light emitting area.

Therefore, the inventors have conceived of the above-described embodiments to cope with such circumstances.

**Claims**

1. An object detector (20) comprising:

an optical scanning system (201) including a light source (21) with N, where $N \geq 2$, light emitting areas (A) disposed apart from each other in at least one direction, wherein the optical scanning system (201) is configured to scan a scanning range with light output from the light source (21), wherein the scanning range is in a scanning direction differing from the at least one direction; and
a light-receiving system (202) including k, where $k \geq 1$, light-receiving units (29) configured to receive light emitted from the optical scanning system (201) and reflected from an object,
wherein the scanning range to be scanned by the optical scanning system (201) is divided in the scanning direction into M, where $M \geq 2$, fields, and the optical scanning system (201) is configured to scan m, where $m \geq 1$, fields out of the M fields in T that is a time period for scanning the scanning range in one scan, and
wherein n, where $n \geq 1$, light emitting areas (A) out of the N light emitting areas (A) are configured to sequentially emit light to each of the m fields at an interval of $T / (m \times n)$ in a time period of $T / m$;
wherein a conditional expression below is satisfied:

$$T / (m \times n) > 2L_{max} / (c \times k)$$

where
$L_{max}$ is a maximum detection distance of the object, and
c is a speed of light, and
wherein m is a submultiple of M;
wherein the n light emitting areas (A) are 1st through n-th light emitting areas that are disposed in the at least one direction,
wherein n is expressed by 2p where p is a natural number, and
wherein one of the 1st through p-th light emitting areas and one of the (p + 1)th through 2p-th light emitting areas are not adjacent to each other and are configured to sequentially emit light when the n light emitting areas (A) sequentially emit light to each of the m fields in the time period of $T / m$.

2. The object detector (20) according to claim 1,

wherein the optical scanning system (201) further includes a light-source drive circuit (51) to drive the light source (21),

wherein the light-source drive circuit (51) includes N capacitive elements (C) corresponding to the N light emitting areas (A) and j, where $j \geq 2$, switching elements (Q) corresponding to at least a part of the N light emitting areas (A), and wherein the light-source drive circuit (51) satisfies a conditional expression below:

$$T / (m \times n) > \tau / j$$

where
$\tau$ is a time period for charging the capacitive elements (C).

3. The object detector (20) according to any one of claims 1 or 2,
wherein the k light-receiving units (29) are two or more light-receiving units (29) disposed apart from each other in the at least one direction.

4. The object detector (20) according to any one of claims 1 through 3,
wherein k is a submultiple of n.

5. The object detector (20) according to any one of claims 1 through 4,
wherein n is a submultiple of N.

6. The object detector (20) according to any one of claims 1 through 5,

wherein the optical scanning system (201) further includes a deflector (24) to deflect the light output from the light source (21),
wherein the deflector (24) is a polygon mirror with a rotation axis substantially parallel to the at least one direction, and
wherein the optical scanning system (201) satisfies a conditional expression below:

$$T = \varphi / \omega$$

where
$\omega$ is an angular speed at which the deflector (24) rotates at a constant speed, and
$\varphi$ is a scanning angle that corresponds to the scanning range.

7. The object detector (20) according to any one of claims 1 to 6,
wherein one of the p-th light emitting area and the (p + 1)th light emitting area first emits light.

8. The object detector (20) according to claim 7,

wherein when the p-th light emitting area first emits light, the n light emitting areas (A) sequentially emit light such that a distance between the one of the first light emitting area through the p-th light emitting area and the one of the (p + 1)th light emitting area through the 2p-th light emitting area is greater than or equal to a distance between the p-th light emitting area and the 2p-th light emitting area, and

wherein when the (p + 1)th light emitting area first emits light, the n light emitting areas A sequentially emit light such that the distance between the one of the first light emitting area through the p-th light emitting area and the one of the (p + 1)th light emitting area through the 2p-th light emitting area that sequentially emit light is greater than or equal to a distance between the first light emitting area and the (p + 1)th light emitting area.

9.  A sensor (10) comprising:

    the object detector (20) according to any one of claims 1 through 8,
    a monitoring controller (300) to obtain movement information including at least one of movement or non-movement of the object, a moving direction, and a moving speed of the object.

10. A movable device (600) comprising:

    the sensor (10) according to claim 9; and
    a movable body (1) in which the sensor (10) is disposed.

**Patentansprüche**

1.  Obj ektdetektor (20), umfassend:

    ein optisches Abtastsystem (201), das eine Lichtquelle (21) mit N, wobei N≥2, lichtemittierenden Flächen (A) beinhaltet, die in wenigstens einer Richtung voneinander entfernt angeordnet sind, wobei das optische Abtastsystem (201) dazu konfiguriert ist, einen Abtastbereich mit von der Lichtquelle (21) ausgegebenem Licht abzutasten, wobei der Abtastbereich in einer Abtastrichtung liegt, die sich von der wenigstens einen Richtung unterscheidet; und
    ein Lichtempfangssystem (202), das k, wobei k≥1, Lichtempfangseinheiten (29) beinhaltet, die dazu konfiguriert sind, von dem optischen Abtastsystem (201) emittiertes und von einem Objekt reflektiertes Licht zu empfangen, wobei der von dem optischen Abtastsystem (201) abzutastende Abtastbereich in der Abtastrichtung in M, wobei M≥2, Felder unterteilt ist, und das optische Abtastsystem (201) dazu konfiguriert ist, m, wobei m≥1, Felder aus den M Feldern in T abzutasten, das eine Zeitspanne zum Abtasten des Abtastbereichs in einer Abtastung ist, und
wobei n, wobei n≥1, lichtemittierende Flächen (A) aus den N lichtemittierenden Flächen (A) dazu konfiguriert sind, in einem Intervall von T / (m × n) in einer Zeitspanne von T / m nacheinander Licht zu jedem der m Felder zu emittieren;
wobei ein nachstehender bedingter Ausdruck erfüllt ist:

$$T / (m \times n) > 2L_{max} / (c \times k)$$

wobei
$L_{max}$ eine maximale Erfassungsentfernung des Objekts ist, und
c eine Lichtgeschwindigkeit ist, und
wobei m ein Teil von M ist;
wobei die n lichtemittierenden Flächen (A) die 1. bis einschließlich n-te lichtemittierenden Flächen sind, die in der wenigstens einen Richtung angeordnet sind,
wobei n durch 2p ausgedrückt wird, wobei p eine natürliche Zahl ist, und
wobei eine der 1. bis einschließlich p-ten lichtemittierenden Flächen und eine der (p + 1)-ten bis einschließlich 2p-ten lichtemittierenden Flächen nicht benachbart zueinander sind und dazu konfiguriert sind, nacheinander Licht zu emittieren, wenn die n lichtemittierenden Flächen (A) nacheinander Licht zu jedem der m Felder in der Zeitspanne T / m emittieren.

2.  Objektdetektor (20) nach Anspruch 1,

    wobei das optische Abtastsystem (201) ferner eine Lichtquellenantriebsschaltung (51) beinhaltet, um die Lichtquelle (21) anzutreiben,
    wobei die Lichtquellenantriebsschaltung (51) N kapazitive Elemente (C), die den N lichtemittierenden Flächen (A) entsprechen, und j, mit j≥2, Schaltelemente (Q), die wenigstens einem Teil der N lichtemittierenden Flächen (A) entsprechen, beinhaltet, und
    wobei die Lichtquellenantriebsschaltung (51) den nachstehenden bedingten Ausdruck erfüllt:

$$T / (m \times n) > \tau / j$$

    wobei
    $\tau$ eine Zeitspanne zum Aufladen der kapazitiven Elemente (C) ist.

3.  Objektdetektor (20) nach einem der Ansprüche 1 oder 2,

wobei die k Lichtempfangseinheiten (29) zwei oder mehr Lichtempfangseinheiten (29) sind, die in wenigstens einer Richtung voneinander entfernt angeordnet sind.

4. Objektdetektor (20) nach einem der Ansprüche 1 bis einschließlich 3,
   wobei k ein Teil von n ist.

5. Objektdetektor (20) nach einem der Ansprüche 1 bis einschließlich 4,
   wobei n ein Teil von N ist.

6. Objektdetektor (20) nach einem der Ansprüche 1 bis einschließlich 5,

   wobei das optische Abtastsystem (201) ferner eine Ablenkeinrichtung (24) beinhaltet, um das von der Lichtquelle (21) ausgegebene Licht abzulenken,
   wobei die Ablenkeinrichtung (24) ein Polygonspiegel mit einer Drehachse im Wesentlichen parallel zu der wenigstens einen Richtung ist, und
   wobei das optische Abtastsystem (201) den nachstehenden bedingten Ausdruck erfüllt:

$$T = \varphi / \omega$$

   wobei
   $\omega$ eine Winkelgeschwindigkeit ist, mit der sich die Ablenkeinrichtung (24) mit einer konstanten Geschwindigkeit dreht, und
   $\varphi$ ein Abtastwinkel ist, der dem Abtastbereich entspricht.

7. Objektdetektor (20) nach einem der Ansprüche 1 bis 6,
   wobei eine der p-ten lichtemittierenden Fläche und der (p + 1)-ten lichtemittierenden Fläche zuerst Licht emittiert.

8. Objektdetektor (20) nach Anspruch 7,

   wobei, wenn die p-te lichtemittierende Fläche zuerst Licht emittiert, die n lichtemittierenden Flächen (A) nacheinander Licht emittieren, sodass ein Abstand zwischen der einen der ersten lichtemittierenden Fläche bis einschließlich der p-ten lichtemittierenden Fläche und der einen der (p + 1)-ten lichtemittierenden Fläche bis einschließlich der 2p-ten lichtemittierenden Fläche größer als oder gleich einem Abstand zwischen der p-ten lichtemittierenden Fläche und der 2p-ten lichtemittierenden Fläche ist, und
   wobei, wenn die (p + 1)-te lichtemittierende Fläche zuerst Licht emittiert, die n lichtemittierenden Flächen A nacheinander Licht emittieren, sodass ein Abstand zwischen der einen der ersten lichtemittierenden Fläche bis einschließlich der p-ten lichtemittierenden Fläche und der einen der (p + 1)-ten lichtemittierenden Fläche bis einschließlich der 2p-ten lichtemittierenden Fläche größer als oder gleich einem Abstand zwischen der ersten lichtemittierenden Fläche und der (p +1)-ten lichtemittierenden Fläche ist.

9. Sensor (10), umfassend:

   den Objektdetektor (20) nach einem der Ansprüche 1 bis einschließlich 8,
   eine Überwachungssteuervorrichtung (300), um Bewegungsinformationen zu erhalten, die wenigstens eine einer Bewegung oder keiner Bewegung des Objekts, einer Bewegungsrichtung und einer Bewegungsgeschwindigkeit des Objekts beinhalten.

10. Bewegliche Vorrichtung (600), umfassend:

    den Sensor (10) nach Anspruch 9; und
    einen beweglichen Körper (1), in dem der Sensor (10) angeordnet ist.

## Revendications

1. Détecteur d'objet (20) comprenant :

   un système de balayage optique (201) comportant une source de lumière (21) avec N, où N ≥ 2, zones émettrices de lumière (A) disposées espacées les unes des autres dans au moins une direction, dans lequel le système de balayage optique (201) est configuré pour balayer une portée de balayage avec de la lumière fournie en sortie depuis la source de lumière (21), dans lequel la portée de balayage est dans une direction différente de l'au moins une direction ; et
   un système récepteur de lumière (202) comportant k, où k ≥ 1, unités réceptrices de lumière (29) configurées pour recevoir de la lumière émise depuis le système de balayage optique (201) et réfléchie à partir d'un objet,
   dans lequel la portée de balayage à balayer par le système de balayage optique (201) est divisée dans la direction de balayage en M, où M ≥ 2, champs, et le système de balayage optique (201) est configuré pour balayer m, où m ≥ 1, champs parmi les M champs pendant T qui est une période pour balayer la portée de balayage en un balayage, et
   dans lequel n, où n ≥ 1, zones émettrices de lumière (A) parmi les N zones émettrices de lumière (A) sont configurées pour émettre séquentiellement de la lumière vers chacun des m champs à un intervalle de T / (m × n) pendant une période de T / m ;

dans lequel une expression conditionnelle ci-dessous est satisfaite :

$$T / (m \times n) > 2L_{max} / (c \times k)$$

où

$L_{max}$ est une distance de détection maximale de l'objet, et

c est une vitesse de lumière, et

dans lequel m est un sous-multiple de M ;

dans lequel les n zones émettrices de lumière (A) sont des 1ère à nième zones émettrices de lumière qui sont disposées dans l'au moins une direction,

dans lequel n est exprimé par 2p où p est un nombre naturel, et

dans lequel l'une des 1ère à pième zones émettrices de lumière et l'une des (p + 1)ieme à 2pième zones émettrices de lumière ne sont pas adjacentes l'une à l'autre et sont configurées pour émettre séquentiellement de la lumière lorsque les n zones émettrices de lumière (A) émettent séquentiellement de la lumière vers chacun des m champs pendant la période de T / m.

2. Détecteur d'objet (20) selon la revendication 1,

dans lequel le système de balayage optique (201) comporte en outre un circuit de pilotage de source de lumière (51) pour piloter la source de lumière (21),

dans lequel le circuit de pilotage de source de lumière (51) comporte N éléments capacitifs (C) correspondant aux N zones émettrices de lumière (A) et j, où j ≥ 2, éléments de commutation (Q) correspondant à au moins une partie des N zones émettrices de lumière (A), et

dans lequel le circuit de pilotage de source de lumière (51) satisfait une expression conditionnelle ci-dessous :

$$T / (m \times n) > \tau / j$$

où

$\tau$ est une période pour charger les éléments capacitifs (C).

3. Détecteur d'objet (20) selon l'une quelconque des revendications 1 ou 2,

dans lequel les k unités réceptrices de lumière (29) sont deux unités réceptrices de lumière (29) ou plus disposées espacées les unes des autres dans l'au moins une direction.

4. Détecteur d'objet (20) selon l'une quelconque des revendications 1 à 3,

dans lequel k est un sous-multiple de n.

5. Détecteur d'objet (20) selon l'une quelconque des revendications 1 à 4,

dans lequel n est un sous-multiple de N.

6. Détecteur d'objet (20) selon l'une quelconque des revendications 1 à 5,

dans lequel le système de balayage optique (201) comporte en outre un déflecteur (24) pour dévier la lumière fournie en sortie depuis la source de lumière (21),

dans lequel le déflecteur (24) est un miroir polygonal avec un axe de rotation sensiblement parallèle à l'au moins une direction, et

dans lequel le système de balayage optique (201) satisfait une expression conditionnelle ci-dessous :

$$T = \varphi / \omega$$

où

$\omega$ est une vitesse angulaire à laquelle le déflecteur (24) tourne à vitesse constante, et

$\varphi$ est un angle de balayage qui correspond à la portée de balayage.

7. Détecteur d'objet (20) selon l'une quelconque des revendications 1 à 6,

dans lequel l'une parmi la pième zone émettrice de lumière et la (p + 1)ieme zone émettrice de lumière émet de la lumière en premier.

8. Détecteur d'objet (20) selon la revendication 7,

dans lequel lorsque la pième zone émettrice de lumière émet de la lumière en premier, les n zones émettrices de lumière (A) émettent séquentiellement de la lumière de sorte qu'une distance entre l'une de la première zone émettrice de lumière à la pième zone émettrice de lumière et l'une de la (p + 1)ième zone émettrice de lumière à la 2pième zone émettrice de lumière soit supérieure ou égale à une distance entre la pième zone émettrice de lumière et la 2pième zone émettrice de lumière, et

dans lequel lorsque la (p + 1)ième zone émettrice de lumière émet de la lumière en premier, les n zones émettrices de lumière A émettent séquentiellement de la lumière de sorte que la distance entre l'une de la première zone émettrice de lumière à la pième zone émettrice de lumière et l'une de la (p + 1)ième zone émettrice de lumière à la 2pième zone émettrice de lumière qui émettent séquentiellement de la lumière soit supérieure ou égale à une distance entre la première zone émettrice de lumière et la $(p + 1)^{ième}$ zone émettrice de lumière.

9. Capteur (10) comprenant :

   le détecteur d'objet (20) selon l'une quelconque des revendications 1 à 8,
   un dispositif de commande de surveillance (300) pour obtenir des informations de déplacement comportant au moins un élément parmi un déplacement ou une absence de déplacement de l'objet, une direction de déplacement, et une vitesse de déplacement de l'objet.

10. Dispositif mobile (600) comprenant :

    le capteur (10) selon la revendication 9 ; et
    un corps mobile (1) dans lequel est disposé le capteur (10).

# FIG. 1

1

20

ROAD
SURFACE

Z

Y⊗ →X

# FIG. 2

600

10

20

30

70

40

50

60

300
(40, 50, 60)

# FIG. 3

# FIG. 4

# FIG. 5

# FIG. 6

# FIG. 7

# FIG. 8

# FIG. 9

# FIG. 10

# FIG. 11

# FIG. 12

# FIG. 13

DIVERGING
RAYS

A

23

21

22

Y

Z → X

DETECTION
LIGHT

24

# FIG. 14

A

21

22

Z

Y → X

RA

24

23

DETECTION
LIGHT

# FIG. 15

SECOND
IRRADIATION FIELD

FIRST
IRRADIATION FIELD

20

DETECTION
LIGHT

0          DETECTION DISTANCE

Y

Z → X

# FIG. 16

IRRADIATION
FIELD

22

A

θ

21

DETECTION LIGHT

Y

Z → X

# FIG. 17

IRRADIATION
FIELD

22

θ

Y

Z ⊙ → X

DETECTION LIGHT

# FIG. 18

IRRADIATION
FIELD

22

θ

Y

Z ⊙ → X

DETECTION LIGHT

# FIG. 19

29

28

f2

Y

Z X

# FIG. 20

28

29

DETECTION DISTANCE

Ls

Y

Z X

# FIG. 21

FIG. 22

EP 3 165 946 B1

# FIG. 23

IRRADIATION
FIELD

22

$\alpha$

DETECTION FIELD
(CONJUGATE IMAGE
OF LIGHT DETECTOR)

Y

Z X

DETECTION
LIGHT

$L_s$                    DETECTION DISTANCE

# FIG. 24

LIGHT-RECEPTIVE
FIELD OF LIGHT
DETECTOR

SECOND IRRADIATION
FIELD

DETECTION
LIGHT

FIRST
IRRADIATION
FIELD

22

$\alpha$

FIRST DETECTION
FIELD (CONJUGATE
IMAGE OF LIGHT
DETECTOR)

Y

Z → X

SECOND DETECTION
FIELD

DETECTION
LIGHT

$L_s$

DETECTION DISTANCE

EP 3 165 946 B1

# FIG. 25

# FIG. 26

# FIG. 27

DETECTION LIGHT

# FIG. 28

DETECTION LIGHT

# FIG. 29

FIG. 30

# FIG. 31

EP 3 165 946 B1

# FIG. 32

# FIG. 33

## FIG. 34A

$G_1$ | $G_2$ | $G_3$ | $G_4$ | $G_5$ | $G_6$ | $G_7$ | $G_8$ | $G_9$ | $G_{10}$ | $G_{11}$ | $G_{12}$

## FIG. 34B

$G_1$ | $G_2$ | $G_3$ | $G_4$ | $G_5$ | $G_6$ | $G_7$ | $G_8$ | $G_9$ | $G_{10}$ | $G_{11}$ | $G_{12}$    FIRST SCAN

$G_1$ | $G_2$ | $G_3$ | $G_4$ | $G_5$ | $G_6$ | $G_7$ | $G_8$ | $G_9$ | $G_{10}$ | $G_{11}$ | $G_{12}$    SECOND SCAN

## FIG. 34C

$G_1$ | $G_2$ | $G_3$ | $G_4$ | $G_5$ | $G_6$ | $G_7$ | $G_8$ | $G_9$ | $G_{10}$ | $G_{11}$ | $G_{12}$    FIRST SCAN

$G_1$ | $G_2$ | $G_3$ | $G_4$ | $G_5$ | $G_6$ | $G_7$ | $G_8$ | $G_9$ | $G_{10}$ | $G_{11}$ | $G_{12}$    SECOND SCAN

$G_1$ | $G_2$ | $G_3$ | $G_4$ | $G_5$ | $G_6$ | $G_7$ | $G_8$ | $G_9$ | $G_{10}$ | $G_{11}$ | $G_{12}$    THIRD SCAN

EP 3 165 946 B1

# FIG. 34D

| $G_1$ | $G_2$ | $G_3$ | $G_4$ | $G_5$ | $G_6$ | $G_7$ | $G_8$ | $G_9$ | $G_{10}$ | $G_{11}$ | $G_{12}$ | FIRST SCAN |

| $G_1$ | $G_2$ | $G_3$ | $G_4$ | $G_5$ | $G_6$ | $G_7$ | $G_8$ | $G_9$ | $G_{10}$ | $G_{11}$ | $G_{12}$ | SECOND SCAN |

| $G_1$ | $G_2$ | $G_3$ | $G_4$ | $G_5$ | $G_6$ | $G_7$ | $G_8$ | $G_9$ | $G_{10}$ | $G_{11}$ | $G_{12}$ | THIRD SCAN |

| $G_1$ | $G_2$ | $G_3$ | $G_4$ | $G_5$ | $G_6$ | $G_7$ | $G_8$ | $G_9$ | $G_{10}$ | $G_{11}$ | $G_{12}$ | FOURTH SCAN |

| $G_1$ | $G_2$ | $G_3$ | $G_4$ | $G_5$ | $G_6$ | $G_7$ | $G_8$ | $G_9$ | $G_{10}$ | $G_{11}$ | $G_{12}$ | FIFTH SCAN |

| $G_1$ | $G_2$ | $G_3$ | $G_4$ | $G_5$ | $G_6$ | $G_7$ | $G_8$ | $G_9$ | $G_{10}$ | $G_{11}$ | $G_{12}$ | SIXTH SCAN |

EP 3 165 946 B1

## FIG. 35

OBJECT

$L_{max}$

20

## FIG. 36

21

$A_1$
$A_2$

$A_{11}$
$A_{12}$

Z

X Y

# FIG. 37

(a-1-1)

# FIG. 38

(a-2-1)

FIRST SCAN

SECOND SCAN

# FIG. 39

(a-2-2)

FIRST SCAN

SECOND SCAN

# FIG. 40A

FIG. 40

FIG. 40A
FIG. 40B

(a-3-1)

FIRST SCAN

SECOND SCAN

# FIG. 40B

THIRD SCAN

FIG. 41A

FIG. 41

FIG. 41A
FIG. 41B

(c-1-1)

# FIG. 41B

# FIG. 42A

FIG. 42 | FIG. 42A |
| FIG. 42B |

(c-2-1)

FIRST SCAN

SECOND SCAN

# FIG. 42B

# FIG. 43A

FIG. 43 | FIG. 43A |
| FIG. 43B |

(c-2-1)

FOURTH SCAN

FIFTH SCAN

# FIG. 43B

SIXTH SCAN

# FIG. 44A

FIG. 44 | FIG. 44A |
| FIG. 44B |

(c-2-1)

SEVENTH SCAN

EIGHTH SCAN

# FIG. 44B

|  | | $G_1$ | $G_2$ | $G_3$ | $G_4$ | $G_5$ | $G_6$ | $G_7$ | $G_8$ | $G_9$ | $G_{10}$ | $G_{11}$ | $G_{12}$ |

NINTH SCAN

$A_1$
$A_2$
$A_3$
$A_4$
$A_5$
$A_6$
$A_7$
$A_8$
$A_9$
$A_{10}$
$A_{11}$
$A_{12}$

# FIG. 45

# FIG. 46

# FIG. 47

EP 3 165 946 B1

FIG. 48

(a-2-3)

|  | G₁ | G₂ | G₃ | G₄ | G₅ | G₆ | G₇ | G₈ | G₉ | G₁₀ | G₁₁ | G₁₂ |
|---|---|---|---|---|---|---|---|---|---|---|---|---|
| FIRST SCAN A₁ | 2 | 8 | 14 | 20 | 26 | 32 | 38 | 44 | 50 | 56 | 62 | 68 |
| A₂ | | | | | | | | | | | | |
| A₃ | 4 | 10 | 16 | 22 | 28 | 34 | 40 | 46 | 52 | 58 | 64 | 70 |
| A₄ | | | | | | | | | | | | |
| A₅ | 6 | 12 | 18 | 24 | 30 | 36 | 42 | 48 | 54 | 60 | 66 | 72 |
| A₆ | | | | | | | | | | | | |
| A₇ | 1 | 7 | 13 | 19 | 25 | 31 | 37 | 43 | 49 | 55 | 61 | 67 |
| A₈ | | | | | | | | | | | | |
| A₉ | 3 | 9 | 15 | 21 | 27 | 33 | 39 | 45 | 51 | 57 | 63 | 69 |
| A₁₀ | | | | | | | | | | | | |
| A₁₁ | 5 | 11 | 17 | 23 | 29 | 35 | 41 | 47 | 53 | 59 | 65 | 71 |
| A₁₂ | | | | | | | | | | | | |

FIG. 49

(c-2-2)

|  | G₁ | G₂ | G₃ | G₄ | G₅ | G₆ | G₇ | G₈ | G₉ | G₁₀ | G₁₁ | G₁₂ |
|---|---|---|---|---|---|---|---|---|---|---|---|---|
| FIRST SCAN A₁ | 2 | | | 6 | | | 10 | | | 14 | | |
| A₂ | | | | | | | | | | | | |
| A₃ | | | | | | | | | | | | |
| A₄ | 4 | | | 8 | | | 12 | | | 16 | | |
| A₅ | | | | | | | | | | | | |
| A₆ | | | | | | | | | | | | |
| A₇ | 1 | | | 5 | | | 9 | | | 13 | | |
| A₈ | | | | | | | | | | | | |
| A₉ | | | | | | | | | | | | |
| A₁₀ | 3 | | | 7 | | | 11 | | | 15 | | |
| A₁₁ | | | | | | | | | | | | |
| A₁₂ | | | | | | | | | | | | |

64

# FIG. 50

60

61

62

63

# FIG. 51

24

26

DETECTION
LIGHT

REFLECTED
LIGHT

RA

Z

Y

X

# FIG. 52

## REFERENCES CITED IN THE DESCRIPTION

**Patent documents cited in the description**

- JP 5096008 B
- JP 2007214564 A
- JP H02306108 B
- US 20150124238 A1
- EP 2631667 A1
- US 5864391 A
- US 5552893 A
- US 6327029 B1
- JP 2010096574 A
- JP 3446466 B
- JP H091997274076 A